(19) **Europäisches Patentamt / European Patent Office / Office européen des brevets**

(11) **EP 3 687 151 B1**

(12) **EUROPEAN PATENT SPECIFICATION**

(45) Date of publication and mention
of the grant of the patent:
**01.05.2024 Bulletin 2024/18**

(21) Application number: **19219775.4**

(22) Date of filing: **27.12.2019**

(51) International Patent Classification (IPC):
**H04N 1/60** *(2006.01)*

(52) Cooperative Patent Classification (CPC):
**H04N 1/6038**

(54) **COLOR PREDICTION METHOD AND COLOR PREDICTION PROGRAM**

FARBVORHERSAGEVERFAHREN UND FARBVORHERSAGEPROGRAMM

PROCÉDÉ ET PROGRAMME DE PRÉDICTION DE COULEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2019 JP 2019011901**

(43) Date of publication of application:
**29.07.2020 Bulletin 2020/31**

(73) Proprietor: **SCREEN Holdings Co., Ltd.
Kyoto-shi, Kyoto 602-8585 (JP)**

(72) Inventor: **YOKOUCHI, Kenichi
KYOTO-SHI, Kyoto 602-8585 (JP)**

(74) Representative: **Kilian Kilian & Partner mbB
Zielstattstraße 23a
81379 München (DE)**

(56) References cited:
WO-A1-03/095212  WO-A1-2017/208935
US-A1- 2010 091 305  US-A1- 2016 360 072

**Description**

BACKGROUND OF THE INVENTION

Field of the Invention

The present invention relates to a color prediction method for predicting a color obtained by overprinting inks of a plurality of colors (in particular, a plurality of colors including a spot color).

Description of Related Art

In recent years, digital printing apparatuses have become popular in the printing industry. However, in the labeling and packaging field, printing (offset printing, gravure printing, flexographic printing, etc.) with printing apparatuses using printing plates (hereinafter referred to as a "conventional printing apparatus" or simply referred to as a "printing apparatus") is still often performed in recent years. Meanwhile, there is an increasing demand for quick delivery for design and content production, and when there are some changes in design or the like in a case in which a conventional printing apparatus is used, cost for recreation of the printing plate or retrogression of the process is high, which is a significant problem. In this respect, a digital printing apparatus does not use a printing plate, and thus, does not need an operation for exchanging or recreating the printing plate. That is, by adopting a digital printing apparatus, it is possible to carry out especially small-lot printing at low cost, and therefore, it is also possible to respond to the demand of quick delivery for design and content production at low cost.

Meanwhile, in the labeling and packaging field, spot colors tend to be often used for enhancing color expression. For this reason, in order to perform printing with a digital printing apparatus using print data generated for printing with a conventional printing apparatus, it is necessary that colors obtained by overprinting spot color inks be predicted and the predicted colors be reproduced with the digital printing apparatus. In the following, prediction values of values (specifically, reflectance or tristimulus values X, Y, and Z in the CIE 1931 XYZ color space) identifying colors obtained by overprinting inks of a plurality of colors is referred to as an "overprint prediction value".

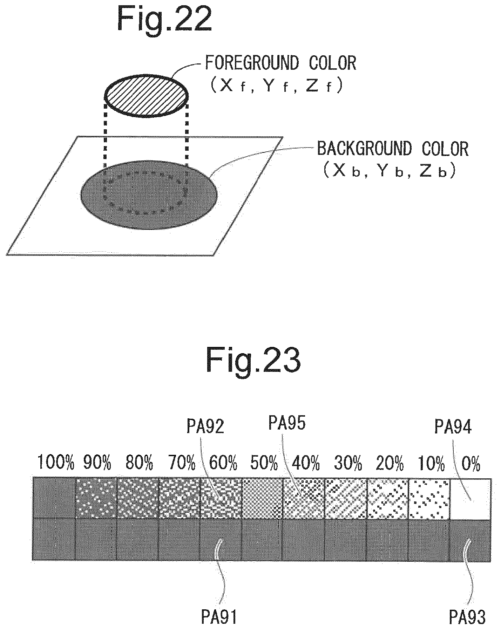

The "Recommendations for predicting spot color overprints" (http://www.color.org/ICC_white_paper_43_Draft2kd.doc) by K. Deshpande and P. Green discloses a method (hereinafter, referred to as "Deshpande et al. method") for relatively easily predicting colors (overprint prediction values) obtained by overprinting inks of a plurality of colors including a spot color. In the Deshpande et al. method, overprint prediction values are expressed as in the following Equations (1) to (3) using tristimulus values X, Y, and Z (see Fig. 22).

$$X = j_x \times (X_b \times X_f) + k_x \ \dots \ (1)$$

$$Y = j_y \times (Y_b \times Y_f) + k_y \ \dots \ (2)$$

$$Z = j_z \times (Z_b \times Z_f) + k_z \ \dots \ (3)$$

Here, $X_b$, $Y_b$, and $Z_b$ are tristimulus values of a background color, $X_f$, $Y_f$, and $Z_f$ are tristimulus values of a foreground color, $j_x$, $j_y$, and $j$, are scaling coefficients, and $k_x$, $k_y$, and $k_z$ are constants. Hereinafter, $j_x$, $j_y$, $j_z$, $k_x$, $k_y$, and $k_z$ are collectively referred to as "overprint coefficient".

Meanwhile, color reproduction methods include additive color mixing and subtractive color mixing. In the case of printing, the subtractive color mixing is applied for color reproduction. In this regard, if ideal subtractive color mixing is performed, the stimulus value X of the color obtained by overprinting is represented by "$X_b \times X_f$" (the same applies to the stimulus values Y and Z), for example. However, in order to obtain a more accurate value, it is necessary to make a correction in consideration of an error caused by the use of an opaque ink and reflection of light on the surface. Therefore, in the Deshpande et al. method, a correction using a linear equation is performed as shown in the above Equations (1) to (3).

In the Deshpande et al. method, a color chart as schematically shown in Fig. 23 is used, for example. This color chart is called a "CxF chart". In the example shown in Fig. 23, the CxF chart is composed of twenty-two patches. The eleven patches in the upper part are patches obtained by printing an ink of a target spot color on a base material such as paper at a dot percentage in increments of 10%. The eleven patches in the lower part are patches obtained by printing an ink of a target spot color on black (black solid) at a dot percentage in increments of 10%. The overprint prediction value is calculated using the value (colorimetry value) obtained by the colorimetry of the patches in the CxF chart described above.

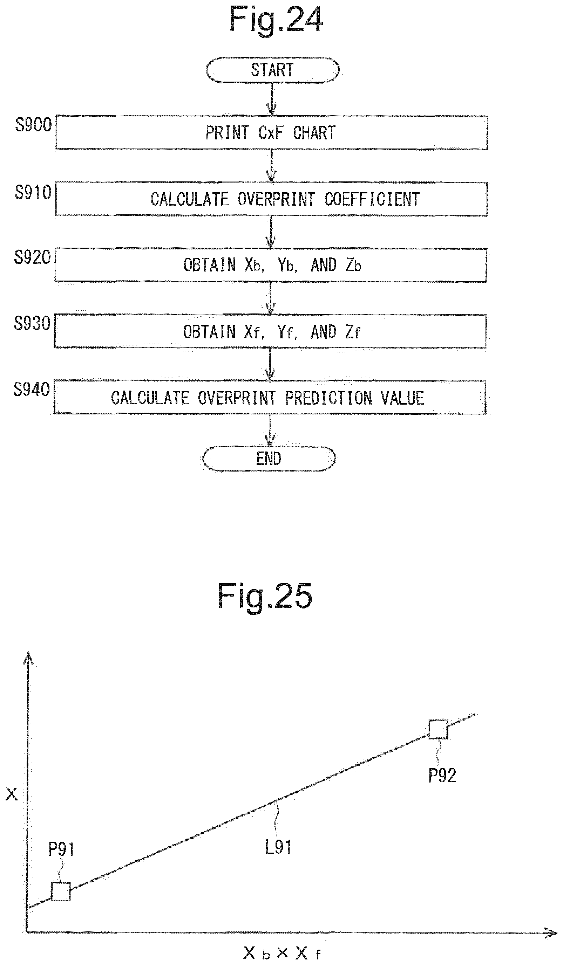

Hereinafter, the Deshpande et al. method will be described in detail with reference to the flowchart in Fig. 24, taking, as an example, calculation of an overprint prediction value in the case where a background color is a spot color at a dot percentage of 40% (referred to as a "spot color 1" for convenience) and a foreground color is another spot color at a dot percentage of 60% (referred to as a "spot color 2" for convenience).

First, the CxF chart is printed using the ink of spot color 1, and further, the CxF chart is printed using the ink of spot color 2 (step S900).

Next, the overprint coefficients $j_x$, $j_y$, $j_z$, $k_x$, $k_y$, and $k_z$ of the above Equations (1) to (3) regarding the spot color 2 are calculated using the CxF chart printed using the ink of spot color 2 (referred to as "spot color 2 chart" for convenience) (step S910). In this regard, focusing on the above Equation (1), for example, the practical maximum value and the minimum value for $X_b \times X_f$ are values obtained by the ink of the spot color 2 being applied on the base material and black (black solid), respectively. The same applies to $Y_b \times Y_f$ and $Z_b \times Z_f$. Therefore, in order to calculate the overprint coefficient, in a coordinate system representing the above Equations (1) to (3) (see Fig. 25. Note that Fig. 25 shows only the coordinate system representing the above Equation (1)), the coordinates representing the stimulus value of a state where the ink of the spot color 2 at a dot percentage of 60% is applied on black are defined as a first calibration point P91, and the coordinates representing the stimulus value of a state where the ink of the spot color 2 at a dot percentage of 60% is applied on the base material are defined as a second calibration point P92.

Focusing on, for example, X among the tristimulus values, values are assigned as follows for the first calibration point P91 with respect to the above Equation (1). The value obtained by colorimetry of the patch PA93 in the spot color 2 chart (black stimulus value) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$, and the value obtained by colorimetry of the patch PA91 in the spot color 2 chart (stimulus value of a state where the ink of the spot color 2 at a dot percentage of 60% is applied on black) is assigned to X (see Fig. 23). In addition, for the second calibration point P92, values are assigned as follows with respect to the above Equation (1). The value obtained by colorimetry of the patch PA94 in the spot color 2 chart (stimulus value of base material) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$ and X (see Fig. 23).

The overprint coefficients $j_x$ and $k_x$ are calculated by solving a simultaneous equation consisting of the equation relating to the first calibration point P91 and the equation relating to the second calibration point P92. That is, an equation representing a straight line denoted by reference numeral L91 in Fig. 25 is obtained. The overprint coefficients $j_y$, $j_z$, $k_y$, and $k_z$ are similarly calculated.

Although the patches are provided in 10% increments in the CxF chart shown in Fig. 23, an overprint coefficient corresponding to the dot percentage between two patches which are adjacent to each other in the horizontal direction can be obtained on the basis of the colorimetric values obtained by linear interpolation.

Next, the values of $X_b$, $Y_b$, and $Z_b$ (tristimulus values of the background color) for calculating final overprint prediction values in the above Equations (1) to (3) are obtained using the CxF chart printed using the ink of spot color 1 (referred to as "spot color 1 chart" for convenience) (step S920). Specifically, the values of $X_b$, $Y_b$, and $Z_b$ are obtained by colorimetry of the patch PA95 (see Fig. 23) in the spot color 1 chart.

Next, the values of $X_f$, $Y_f$, and $Z_f$ (tristimulus values of the foreground color) for calculating the final overprint prediction values in the above Equations (1) to (3) are obtained using the spot color 2 chart (step S930). Specifically, the values of $X_f$, $Y_f$, and $Z_f$ are obtained by colorimetry of the patch PA92 (see Fig. 23) in the spot color 2 chart.

Finally, the values obtained in steps S910 to S930 are substituted into the above Equations (1) to (3), whereby the tristimulus values X, Y, and Z as overprint prediction values are calculated (step S940). This corresponds to, for example, calculating, as the value of X, the ordinate value of the straight line L91 in Fig. 25 when the abscissa indicates the product of "$X_b$ calculated in step S920" and "$X_f$ calculated in step S930".

In the above description, the values of X, $X_f$, and $X_b$ relating to the first calibration point P91 (see Fig. 25) are obtained by colorimetry of the patches PA91, PA92, and PA93 in the spot color 2 chart. However, if a highly accurate overprint prediction value is not necessary, the first calibration point P91 can be regarded as being located at the origin of the graph in Fig. 25 for simplicity. In this case, the colorimetry of the patches PA91 and PA93 in the spot color 2 chart is not necessary (the colorimetry of the patch PA92 is still necessary for obtaining the values of X and $X_f$ of the second calibration point P92). In this case, the tristimulus values X, Y, and Z as the overprint prediction values can be calculated without printing the lower patch group including the patches PA91 and PA93 in the CxF chart shown in Fig. 23. The CxF chart having the upper patch group shown in Fig. 23 without having the lower patch group is herein referred to as a "simple CxF chart" for convenience.

It should be noted that, in relation to the present invention, Japanese Laid-Open Patent Publication No. 6-281501 discloses a color value correction device for obtaining, from a color value obtained by a certain colorimetric device, a color value obtained by another colorimetric device using a neural network.

Meanwhile, spectral reflectances are obtained by performing colorimetry of each patch in the CxF chart using a spectral colorimeter. The spectral reflectances are obtained, for example, in 10 nm increments in the wavelength range of 380 to 730 nm. In this case, one color is specified by 36 spectral reflectances. When an overprint prediction value is calculated with the Deshpande et al. method, such spectral reflectances can be used instead of the tristimulus values. In this case, when n is an integer between 1 and 36 inclusive, the spectral reflectance R(n) as the overprint prediction value is expressed as the following Equation (4).

$$R(n) = j(n) \times (R(n)_b \times R(n)_f) + k(n) \ldots (4)$$

In this Equation, $R(n)_b$ is the spectral reflectance of a background color, $R(n)_f$ is the spectral reflectance of a foreground color, and j(n) and k(n) are overprint coefficients (specifically, j(n) is a scaling coefficient and k(n) is a constant).

By using the above Equation (4) instead of the above Equations (1) to (3) when calculating the overprint prediction value, a color obtained by overprinting two spot color inks can be accurately predicted.

Here, attention is focused on predicting a color obtained by overprinting a process color ink (typically, a combination of C, M, Y, and K inks) and a spot color ink. In this regard, when these inks are overprinted, usually, the spot color ink is applied on the process color ink. According to the Deshpande et al. method, when a color obtained by overprinting a process color ink and a spot color ink is predicted, tristimulus values are obtained, using the ICC profile, on the basis of CMYK values (combination of C value, M value, Y value, and K value) in regard to the CMYK part (part where the process color ink is applied). Then, taking the obtained tristimulus values as tristimulus values ($X_b$, $Y_b$, and $Z_b$ mentioned above) of the background color, an overprint prediction value is calculated in the same manner as in the case of overprinting two spot color inks.

Regarding the overprint of two spot color inks, the overprint prediction value can be obtained using spectral reflectances as described above. On the other hand, regarding the overprint of the process color ink and the spot color ink, the overprint prediction value is obtained using the tristimulus values. For this reason, regarding the overprint of the process color ink and the spot color ink, there is a concern that an overprint prediction value cannot be obtained with sufficient accuracy. If spectral reflectance data is intended to be obtained by performing colorimetry of the CxF chart for the target process color ink in order to increase accuracy, printing of the CxF chart and colorimetry thereof are required for each combination of four values (C value, M value, Y value, and K value), which leads to a significant increase in cost.

Further prior art is shown in US 2016/360072 A1, which shows subject matters according to the preamble of the independent claims.

SUMMARY OF THE INVENTION

In view of this, an object of the present invention is to provide a color prediction method with which a color obtained by overprinting a process color ink and a spot color ink is predicted more accurately than with a conventional method.

This object is achieved by a method according to claim 1 and a program according to claim 10.

One aspect of the present invention is directed to a color prediction method for predicting a color obtained by applying a spot color ink on a process color ink, the color prediction method including:

a learning step (S110, S210, S310) of performing machine learning using a plurality of pieces of teaching data including color component values for the process color ink and spectral characteristics corresponding to the color component values by a neural network that takes color component values as input data and takes a spectral characteristics as output data;

an inference step (S130, S220, S330) of giving, as input data, color component values of a processing-target process color ink which is a process color ink constituting a prediction target color to a learned neural network obtained in the learning step (S110, S210, S310) so as to obtain spectral characteristics for the processing-target process color ink;

a correction step (S140, S240, S350) of correcting the spectral characteristics obtained in the inference step (S130, S220, S330); and

a prediction step (S150, S250, S360) of obtaining, based on the spectral characteristics after correction by the correction step (S140, S240, S350) and spectral characteristics for a processing-target spot color ink which is a spot color ink constituting the prediction target color, spectral characteristics in a state where the processing-target spot color ink is applied on the processing-target process color ink,

wherein, in the correction step (S140, S240, S350), the spectral characteristics after the correction are obtained such that a difference between tristimulus values of the processing-target process color ink and tristimulus values corresponding to the spectral characteristics after the correction is small, while an increase in a difference between the spectral characteristics before the correction and the spectral characteristics after the correction is suppressed.

According to such a configuration, regarding the processing-target process color ink, the spectral characteristics are obtained from the color component values using the neural network. Then, the spectral characteristics are corrected. The spectral characteristics after correction are obtained such that the difference between the tristimulus values of the prediction source and the tristimulus values corresponding to the spectral characteristics after the correction is small. Therefore, even if the accuracy of predicting the spectral characteristics by the neural network is insufficient, the spectral characteristics corresponding to the tristimulus values as close to the tristimulus values of the prediction source as possible can be obtained by the correction. Then, the spectral characteristics in the state where the processing-target spot color ink is applied on the processing-target process color ink is obtained on the basis of the spectral characteristics (spectral characteristics for the processing-target process color ink) thus obtained and the spectral characteristics for the processing-target spot color ink. Since the color obtained by overprinting the process color ink and the spot color ink is predicted using the spectral characteristics in this way, the color is predicted with higher accuracy than with the conventional method using the tristimulus values. In addition, since the spectral characteristics corresponding to the tristimulus values as close to the tristimulus values of the prediction source as possible is used as described above in regard to the process color ink, a decrease in the prediction accuracy due to the use of the neural network can be suppressed. From the above, the color obtained by overprinting the process color ink and the spot color ink can be predicted with higher accuracy than ever before.

Another aspect of the present invention is directed to a color prediction program for predicting a color obtained by applying a spot color ink on a process color ink, the color prediction program causing a computer to execute:

a learning step (S110, S210, S310) of performing machine learning using a plurality of pieces of teaching data including color component values for the process color ink and spectral characteristics corresponding to the color component values by a neural network that takes color component values as input data and takes spectral characteristics as output data;

an inference step (S130, S220, S330) of giving, as input data, color component values of a processing-target process color ink which is a process color ink constituting a prediction target color to a learned neural network obtained in the learning step (S110, S210, S310) so as to obtain spectral characteristics for the processing-target process color ink;

a correction step (S140, S240, S350) of correcting the spectral characteristics obtained in the inference step (S130, S220, S330); and

a prediction step (S150, S250, S360) of obtaining, based on the spectral characteristics after correction by the correction step (S140, S240, S350) and spectral characteristics for a processing-target spot color ink which is a spot color ink constituting the prediction target color, spectral characteristics in a state where the processing-target spot color ink is applied on the processing-target process color ink,

wherein, in the correction step (S140, S240, S350), the spectral characteristics after the correction are obtained such that a difference between tristimulus values of the processing-target process color ink and tristimulus values corresponding to the spectral characteristics after the correction is small, while an increase in a difference between the spectral characteristics before the correction and the spectral characteristics after the correction is suppressed.

These and other objects, features, modes, and advantageous effects of the present invention will become more apparent from the following detailed description of the present invention with reference to the accompanying drawings.

BRIEF DESCRIPTION OF THE DRAWINGS

Fig. 1 is a diagram showing an overall configuration of a printing system according to one embodiment of the present invention.
Fig. 2 is a diagram showing a hardware configuration of a print data generation apparatus in the embodiment.
Fig. 3 is a diagram for describing overprinting of a process color ink and a spot color ink in the embodiment.
Fig. 4 is a diagram for describing a method for obtaining spectral reflectances for a processing-target process color ink in the embodiment.
Fig. 5 is a diagram showing an example of the structure of a neural network used in the embodiment.
Fig. 6 is a diagram for describing a process during learning using the neural network in the embodiment.
Fig. 7 is a diagram showing a result of an experiment relating to prediction of spectral reflectances using a neural network in the embodiment.
Fig. 8 is a diagram for describing correction of the spectral reflectances obtained by the neural network in the embodiment.

Fig. 9 is a flowchart showing a procedure of a color prediction process in the embodiment.

Fig. 10 is a flowchart showing a procedure of acquiring teaching data in the embodiment.

Fig. 11 is a block diagram for describing details of acquisition of the teaching data in the embodiment.

Fig. 12 is a diagram for describing an objective function used for correction of the spectral reflectances in the embodiment.

Fig. 13 is a flowchart showing a procedure of an overprint prediction process in the embodiment.

Fig. 14 is a diagram for describing the overprint prediction process in the embodiment.

Fig. 15 is a diagram for describing the overprint prediction process in the embodiment.

Fig. 16 is a block diagram for describing the flow of a process for one PDF file in the embodiment.

Fig. 17 is a flowchart showing a procedure of the process for one PDF file in the embodiment.

Fig. 18 is a diagram for describing a method for obtaining the spectral reflectances for the processing-target process color ink in a first modification of the embodiment.

Fig. 19 is a flowchart showing a procedure of a color prediction process in the first modification of the embodiment.

Fig. 20 is a diagram for describing a method for obtaining the spectral reflectances for the processing-target process color ink in a second modification of the embodiment.

Fig. 21 is a flowchart showing a procedure of a color prediction process in the second modification of the embodiment.

Fig. 22 is a diagram for describing a Deshpande et al. method in relation to a conventional example.

Fig. 23 is a diagram schematically showing an example of a CxF chart in relation to the conventional example.

Fig. 24 is a flowchart for describing the Deshpande et al. method in relation to the conventional example.

Fig. 25 is a diagram for describing the Deshpande et al. method in relation to the conventional example.

## DETAILED DESCRIPTION OF PREFERRED EMBODIMENTS

One embodiment of the present invention will now be described with reference to the accompanying drawings.

### <1. Overall configuration of printing system>

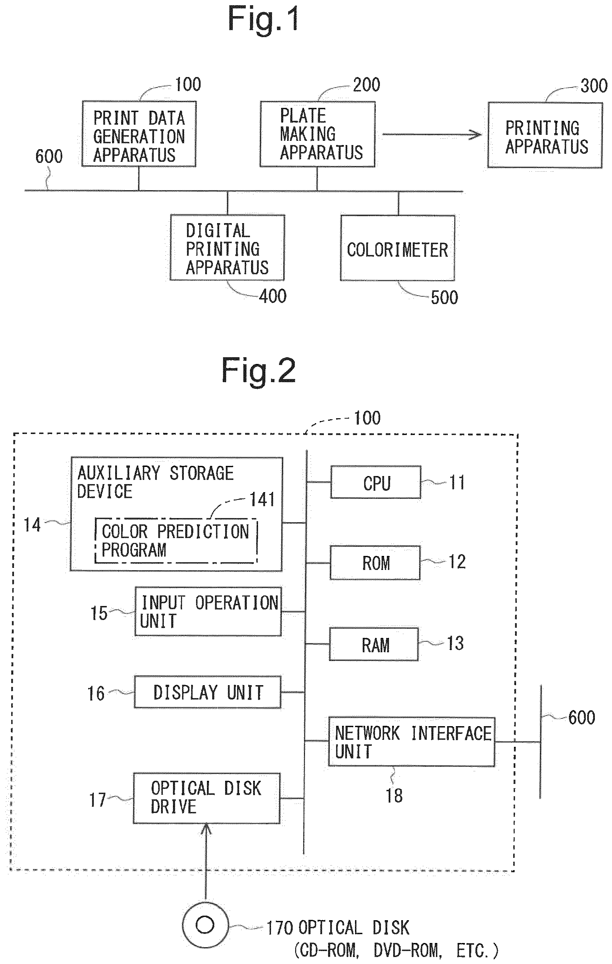

Fig. 1 is a diagram showing an overall configuration of a printing system according to one embodiment of the present invention; The printing system includes: a print data generation apparatus 100 that generates print data by performing various processes on submitted data such as a PDF file; a plate making apparatus 200 that produces a printing plate on the basis of the print data; a printing apparatus 300 that performs printing using the printing plate manufactured by the plate making apparatus 200; a digital printing apparatus 400 such as an inkjet printer or copier that performs printing on the basis of the print data which is digital data without using the printing plate; and a colorimeter 500 for measuring a color. The print data generation apparatus 100, the plate making apparatus 200, the digital printing apparatus 400, and the colorimeter 500 are communicably interconnected by a communication line 600. Note that the colorimeter 500 used in the present embodiment is a spectral colorimeter.

In the present embodiment, in the print data generation apparatus 100, when print data is generated on the basis of the submitted data, a color prediction process for predicting a color of each pixel data included in the submitted data is performed. This color prediction process includes a process for predicting a color of a portion where a process color ink and a spot color ink are overprinted. Further, the print data generation apparatus 100 also generates print data for creating the above-described CxF chart (see Fig. 23) and a color chart for process colors. Furthermore, the print data generation apparatus 100 performs a process for converting the data obtained by the color prediction process into print data in a format that can be printed by the digital printing apparatus 400. It should be noted that the color prediction process will be described in detail later.

### <2. Configuration of print data generation apparatus>

Fig. 2 is a diagram showing a hardware configuration of the print data generation apparatus 100 in the present embodiment. The print data generation apparatus 100 is implemented by a personal computer, and includes a CPU 11, a ROM 12, a RAM 13, an auxiliary storage device 14, an input operation unit 15 such as a keyboard, a display unit 16, an optical disk drive 17, and a network interface unit 18. The submitted data transmitted through the communication line 600 is inputted into the print data generation apparatus 100 via the network interface unit 18. Print data generated by the print data generation apparatus 100 is sent to the digital printing apparatus 400 through the communication line 600 via the network interface unit 18.

A program (hereinafter, referred to as a "color prediction program") 141 for performing the color prediction process is stored in the auxiliary storage device 14. The color prediction program 141 is embedded, for example, in a program for performing a series of processes for generating print data for the digital printing apparatus 400 from the submitted data. The color prediction program 141 is provided by being stored in a computer readable recording medium such as a CD-ROM or a DVD-ROM. That is, the user purchases, for example, an optical disk (CD-ROM, DVD-ROM, etc.) 170 as a recording medium for the color prediction program 141, mounts the optical disk 170 on the optical disk drive 17, reads the color prediction program 141 from the optical disk 170, and installs the read program in the auxiliary storage device 14. Alternatively, the color prediction program 141 sent through the communication line 600 may be received by the network interface unit 18 and installed in the auxiliary storage device 14.

It should be noted that, when the color prediction program 141 is executed, an enormous amount of calculation processing is often performed. Therefore, a GPU may be provided as a processor instead of the CPU 11, or the CPU 11 and the GPU may be provided as processors.

<3. Color prediction process>

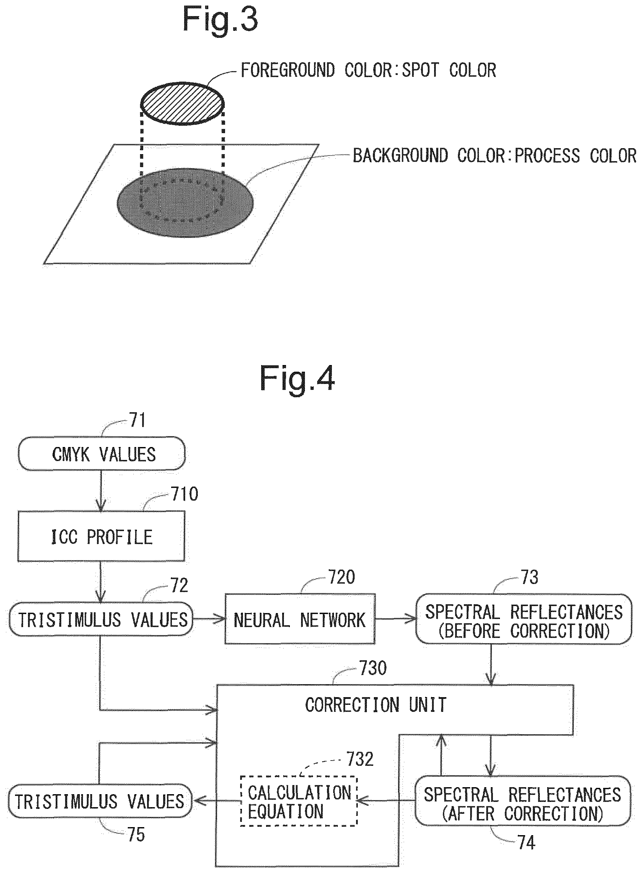

Next, the color prediction process will be described. The color prediction process includes a process for predicting a color obtained by overprinting a plurality of spot color inks, and a process for predicting a color obtained by overprinting a process color ink and a spot color ink. It should be noted that the process for predicting a color obtained by overprinting a process color ink and a spot color ink will be described herein, and other processes will not be described because they are not directly related to the present invention. Further, in the following description, it is assumed that, when a process color ink and a spot color ink are overprinted, the spot color ink is applied onto the process color ink as shown in Fig. 3.

<3.1 Detail of process>

In the present embodiment, the above-described overprint prediction value is calculated using spectral reflectances. In this regard, for the spot color ink, the spectral reflectances are obtained by performing colorimetry of each patch in the CxF chart as has been conventionally done. On the other hand, for the process color ink, the spectral reflectances are acquired using a neural network. However, the spectral reflectances outputted from the neural network are not directly used. The spectral reflectances after being corrected as described later are used. Then, the overprint prediction value is calculated taking the spectral reflectances after the correction as the spectral reflectances of a background color and taking the spectral reflectances obtained by colorimetry of the CxF chart as the spectral reflectances of a foreground color.

It should be noted that, in the following, the color for which the overprint prediction value is obtained is referred to as a "prediction target color", a process color ink (typically, a combination of C, M, Y, and K inks) that constitutes the prediction target color is referred to as a "processing-target process color ink", and a spot color ink constituting the prediction target color is referred to as a "processing-target spot color ink".

A method for obtaining the spectral reflectances for the processing-target process color ink will be described with reference to Fig. 4. In the present embodiment, a neural network 720 that predicts spectral reflectances 73 on the basis of tristimulus values 72 is prepared. Prior to the prediction of the spectral reflectances for the processing-target process color ink, a process for causing the neural network 720 to learn in advance the relationship between the tristimulus values and the spectral reflectances is performed. Then, using the learned neural network 720, the spectral reflectances for the processing-target process color ink are predicted.

The process in the neural network 720 is roughly classified into a learning stage process and a prediction (inference) stage process. In the learning stage, teaching data is given to the neural network 720, and machine learning using the teaching data is performed in the neural network 720. The neural network 720 is given tristimulus values and spectral reflectances as the teaching data. It should be noted that the tristimulus values are given as input data to an input layer and the spectral reflectances are given as correct answer data. In the present embodiment, one piece of teaching data is composed of 36 spectral reflectances obtained by colorimetry of one process-color-ink patch and tristimulus values X, Y, and Z obtained from the above 36 spectral reflectances. The tristimulus values X, Y, and Z are determined by known methods from spectral distribution of a light source, spectral reflectances, and color matching functions associated with the respective tristimulus values X, Y, and Z. More specifically, the tristimulus values X, Y, and Z are calculated by the following Equation (5).

$$X = Km \sum S(\lambda) \cdot R(\lambda) \cdot x(\lambda)$$

$$Y = Km \sum S(\lambda) \cdot R(\lambda) \cdot y(\lambda) \quad \Big\} \cdots (5)$$

$$Z = Km \sum S(\lambda) \cdot R(\lambda) \cdot z(\lambda)$$

Here, Km represents the maximum luminous efficiency, $\Sigma$ represents the sum of values every 10 nm for X (wavelength) (for example, values every 10 nm in the wavelength range of 380 to 730 nm), $S(\lambda)$ represents the spectral distribution of a light source, $R(\lambda)$ represents the spectral reflectance, and $x(\lambda)$, $y(\lambda)$, and $z(\lambda)$ are color matching functions associated with the tristimulus values X, Y, and Z, respectively.

In the prediction stage, first, the tristimulus values 72 are obtained using an ICC profile 710 on the basis of the CMYK values (combination of C value, M value, Y value, and K value) for the processing-target process color ink. Then, the tristimulus values 72 are given to the learned neural network 720. As a result, the spectral reflectances 73 for the processing-target process color ink is outputted from the neural network 720.

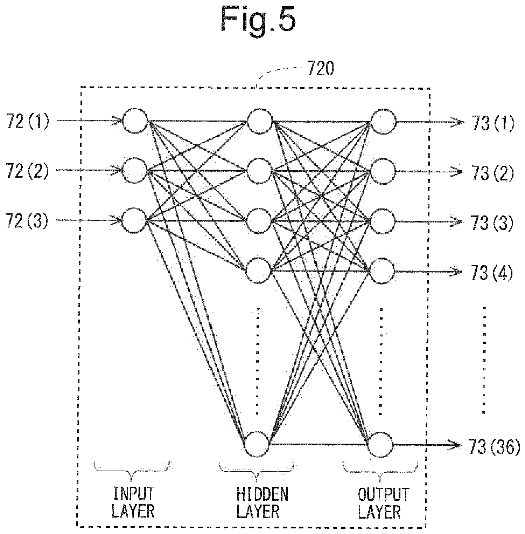

Fig. 5 is a diagram showing an example of the structure of the neural network 720 used in the present embodiment. The neural network 720 includes an input layer, a hidden layer (intermediate layer), and an output layer. The input layer is composed of three units (neurons) that receive tristimulus values 72(1) to 72(3). It should be noted that reference numerals 72(1), 72(2), and 72(3) represent the stimulus value X, the stimulus value Y, and the stimulus value Z, respectively. The hidden layer is composed of 36 units. Note that the number of units in the hidden layer is not limited to 36. In addition, although the number of hidden layers is 1 in the example shown in Fig. 5, the number of hidden layers may be 2 or more. The output layer is composed of 36 units that output 36 spectral reflectances 73(1) to 73(36).

The input layer and the hidden layer are fully connected, and the hidden layer and the output layer are also fully connected. A sigmoid function is adopted as the activation function of the hidden layer and the output layer. However, a function other than the sigmoid function may be adopted as the activation function.

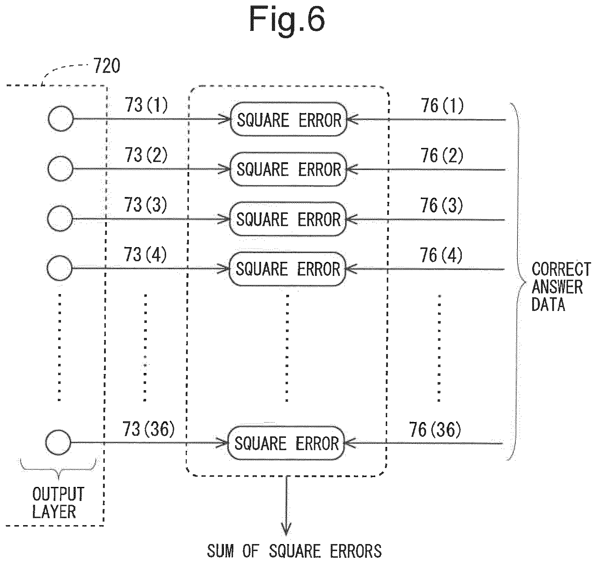

When performing learning using the neural network 720, the tristimulus values 72(1) to 72(3) are given to the input layer. As a result, forward propagation processing is performed in the neural network 720, and the sum of square errors of the spectral reflectances 73(1) to 73(36) outputted from the output layer and the spectral reflectances 76(1) to 76(36) which are correct answer data is obtained (see Fig. 6). Then, the parameters (weighting coefficients, biases) of the neural network 720 are updated by using the gradient descent method on the basis of the result obtained by the back propagation processing of the errors. The above parameters are optimized by repeating the learning as described above. It should be noted that, as a learning method, batch learning may be used in which all pieces of teaching data are given to the neural network 720 in a collective manner, mini-batch learning may be used in which teaching data is divided into a plurality of groups, and the teaching data is given to the neural network 720 for each group, or online learning may be used in which teaching data is given to the neural network 720 one by one.

When performing prediction (inference) using this neural network 720, the tristimulus values 72(1) to 72(3) for the processing-target process color ink are given to the input layer. Then, by performing the forward propagation processing in the neural network 720, the spectral reflectances 73(1) to 73(36) are outputted from the output layer.

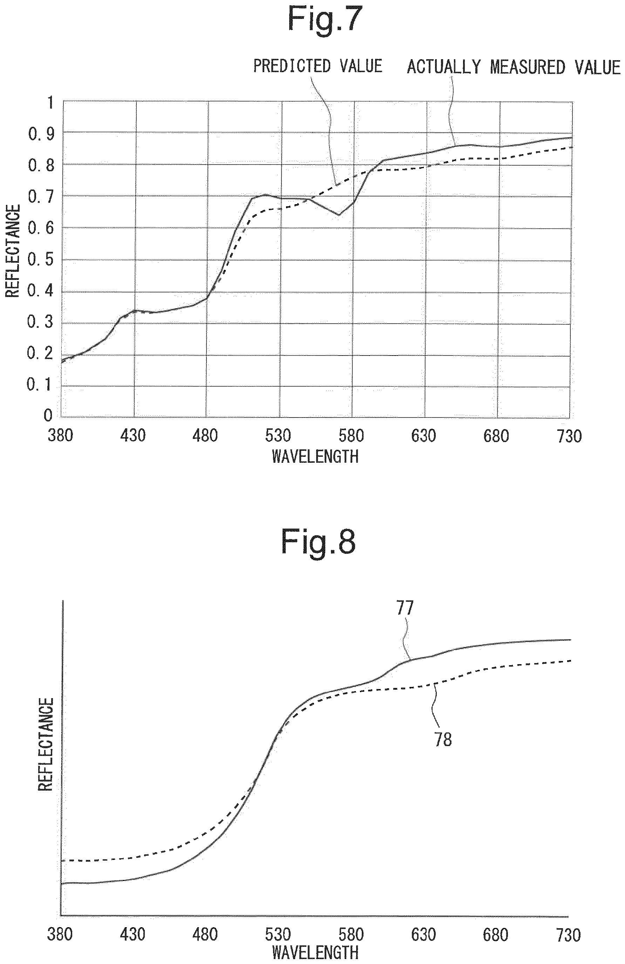

Meanwhile, an experiment for obtaining spectral reflectances (predicted values) for a certain color using the neural network 720 described above has been performed. As a result, predicted values and actually measured values (values obtained by actually performing colorimetry of the corresponding color) have a relationship as shown in Fig. 7. It can be seen from Fig. 7 that, considering that 36 values are predicted from only 3 input values, the prediction accuracy is relatively satisfactory.

However, there may be a little difference between the tristimulus values calculated by the above Equation (5) on the basis of the spectral reflectances 73 obtained by the neural network 720 and the tristimulus values 72 of the prediction source. Therefore, in the present embodiment, the spectral reflectances 73 obtained by the neural network 720 are corrected by a correction unit 730 (see Fig. 4). It should be noted that the correction unit 730 is a functional component implemented by executing the color prediction program 141. The correction unit 730 calculates spectral reflectances 74 after the correction such that the difference between the tristimulus values 72 of the prediction source and the tristimulus values 75 corresponding to the spectral reflectances 74 after the correction is small, while suppressing an increase in the difference between the spectral reflectances 73 before the correction and the spectral reflectances 74 after the correction. It should be noted that the tristimulus values 75 corresponding to the spectral reflectances 74 after the correction are calculated by a calculation equation 732 shown in the above Equation (5). By the process performed by the correction unit 730, the spectral reflectances 73 represented by a solid line denoted by reference numeral 77 in Fig. 8 are corrected to the spectral reflectances 74 represented by a dotted line denoted by reference numeral 78 in Fig. 8, for example.

Before the execution of the process (overprint prediction process) for calculating the overprint prediction value on the basis of the data related to the processing-target spot color ink and the data related to the processing-target process color ink, the spectral reflectances for the processing-target process color ink are obtained in the manner described above.

<3.2 Processing procedure>

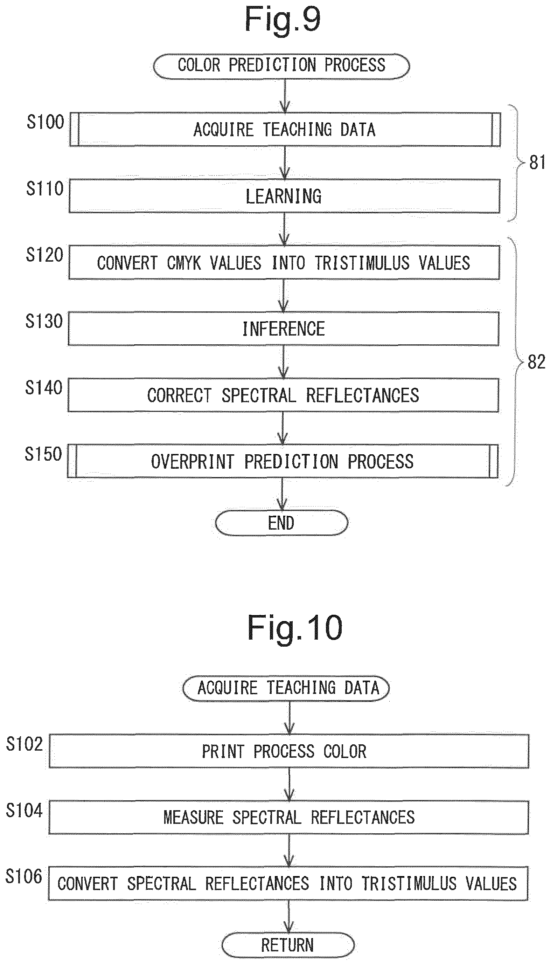

Next, the procedure of the color prediction process (here, the process for predicting a color obtained by overprinting the processing-target process color ink and the processing-target spot color ink) will be described with reference to the flowchart shown in Fig. 9.

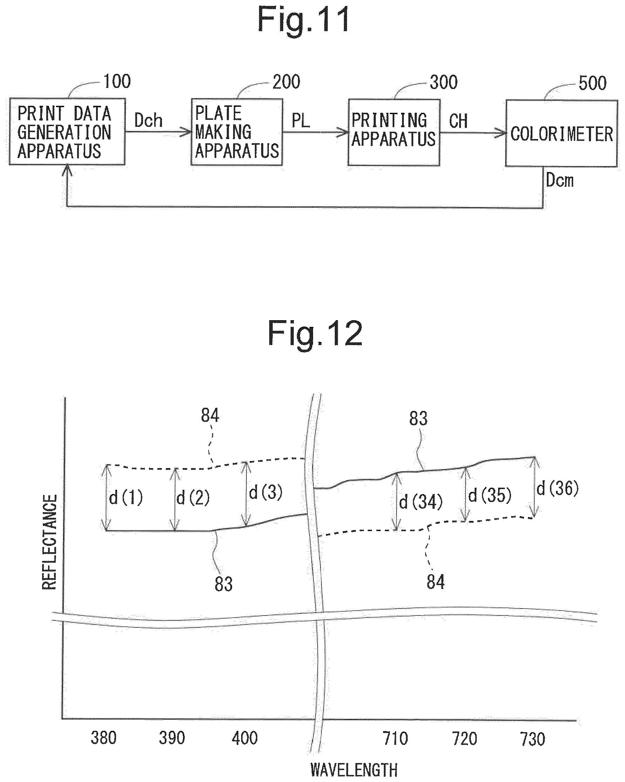

First, a process of acquiring teaching data necessary for learning in the neural network 720 is performed (step S100). In the step S100, it is preferable to acquire a sufficient number of teaching data pieces so that spectral reflectances are accurately predicted. Here, it is assumed that Q pieces of teaching data are acquired in the step S100. Specifically, the step S100 includes a step of printing a process color (step S102), a step of measuring spectral reflectances (step S104), and a step of obtaining tristimulus values from the spectral reflectances (S106), as shown in Fig. 10. The processes in these steps will be described in detail with reference to Fig. 11.

In the step S102, first, print data Dch for outputting a color chart including Q process color patches is created by the print data generation apparatus 100, and the created print data Dch is sent to the plate making apparatus 200. The plate making apparatus 200 produces a printing plate PL on the basis of the print data Dch. Then, the printing apparatus 300 performs printing using the printing plate PL. Thus, the color chart CH is outputted from the printing apparatus 300.

In the step S104, the colorimeter 500 performs colorimetry of the patches included in the color chart CH printed in the step S102. Colorimetric data Dcm obtained by the colorimetry by the colorimeter 500 is sent to the print data generation apparatus 100. As described above, the colorimeter 500 used in the present embodiment is a spectral colorimeter. Therefore, the colorimetric data Dcm obtained by the colorimetry is spectral reflectance data. In the present embodiment, spectral reflectance data is obtained in 10 nm increments in the wavelength range of 380 to 730 nm. However, it is not limited thereto. For example, the spectral reflectance data may be obtained in increments of a unit wavelength range of an appropriate size (for example, in 10 nm increments) in the wavelength range of 400 to 700 nm. Therefore, by performing colorimetry of any one of the patches in the color chart CH, the spectral reflectance data are obtained, the number of the spectral reflectance data (for example, 36) is obtained by dividing the wavelength range by the unit wavelength range.

In the step S106, tristimulus values X, Y, and Z are obtained from the 36 spectral reflectances obtained in the step S104. As described above, the tristimulus values X, Y, and Z are calculated by the above Equation (5). In this manner, in the step S106, the 36 spectral reflectances are converted into the tristimulus values X, Y, and Z.

After acquiring the teaching data, machine learning using the teaching data obtained in the step S100 is performed by the neural network 720 (step S110). By machine learning in the step S110, the parameters (weighting coefficients, biases) of the neural network 720 are optimized. The neural network 720 having the optimized parameters is used for the process in the step S130 described later.

Note that the processes in the step S100 and the step S110 (the processes marked with reference numeral 81 in Fig. 9) need to be performed only once, and do not need to be performed for each process for one prediction target color (color obtained by overprinting the processing-target process color ink and the processing-target spot color ink). On the other hand, the processes in the step S120 and the subsequent steps (the processes marked with reference numeral 82 in Fig. 9) need to be performed for each process for one prediction target color.

In the step S120, a process for acquiring the tristimulus values 72 for the processing-target process color ink is performed. Specifically, the CMYK values 71 for the processing-target process color ink are converted into the tristimulus values 72 using the ICC profile 710.

Next, the spectral reflectances 73 for the processing-target process color ink are obtained by giving, as input data, the tristimulus values 72 obtained in the step S120 to the learned neural network (neural network having optimized parameters) 720 obtained in the step S110 (step S130).

Then, a process for correcting the spectral reflectances 73 obtained in the step S130 is performed (step S140). In the step S140, as described above, the spectral reflectances 74 after the correction is obtained such that the difference between the tristimulus values 72 acquired in the step S120 and the tristimulus values 75 corresponding to the spectral reflectances 74 after the correction is small, while an increase in the difference between the spectral reflectances 73 before the correction and the spectral reflectances 74 after the correction is suppressed. Specifically, the spectral reflectances 74 are obtained so that the value of an objective function L expressed by the following Equation (6) is minimized. Note that the spectral reflectances 74 by which the value of the objective function L is minimized are obtained by, for example, a gradient method.

$$L = \Delta X + \Delta Y + \Delta Z + \Delta S \; ... \; (6)$$

Here, $\Delta X$ is a value determined according to the difference between the stimulus value X of the tristimulus values 72 and the stimulus value X corresponding to the spectral reflectances 74 after the correction (for example, the square of the difference or the absolute value of the difference) (the same is applied to $\Delta Y$ and $\Delta Z$), and $\Delta S$ is the sum of squares of the differences between the spectral reflectances 73 before the correction and the spectral reflectances 74 after the correction. Assuming that the spectral reflectances 73 before the correction are represented by a solid line denoted by reference numeral 83 in Fig. 12 and that the spectral reflectances 74 after the correction are represented by a dotted line denoted by reference numeral 84 in Fig. 12, since there are 36 pieces of spectral reflectance data for both before the correction and after the correction, $\Delta S$ is expressed by the following Equation (7) when the differences between the spectral reflectance data before the correction and the spectral reflectance data after the correction are represented by d(1) to d(36) .

$$\Delta S = \sum_{i=1}^{36} (d(i))^2 \quad \cdots (7)$$

It should be noted that, according to the invention, regarding the objective function L, a coefficient is provided for each term. In this case, the objective function L is expressed as the following Equation (8).

$$L = C1 \cdot \Delta X + C2 \cdot \Delta Y + C3 \cdot \Delta Z + C4 \cdot \Delta S \; ... \; (8)$$

Here, C1 to C4 are coefficients. For example, in a case in which the proximity of the waveform shape of the spectral reflectances before the correction to the waveform shape of the spectral reflectances after the correction is emphasized as compared to the proximity of the tristimulus values before the correction to the tristimulus values after the correction, the coefficient C4 may be increased.

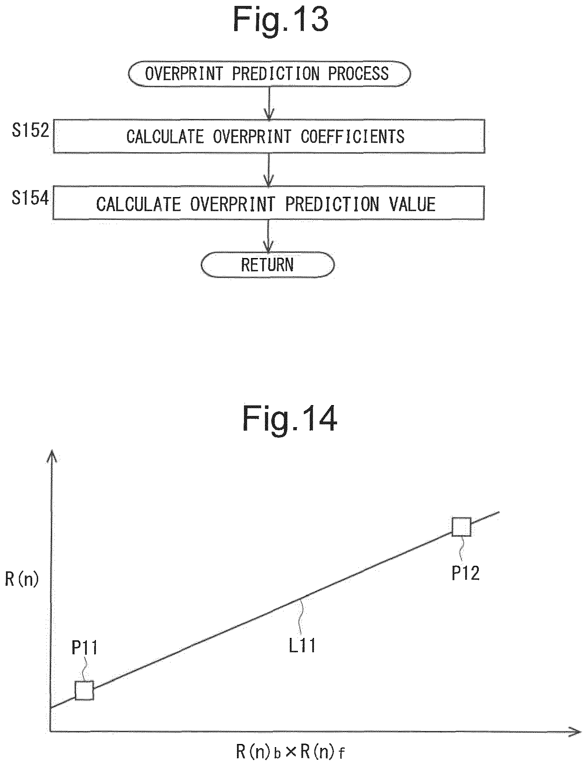

After the spectral reflectances are corrected as described above, the overprint prediction process is performed on the basis of the spectral reflectances (spectral reflectances for the processing-target process color ink) 74 after the correction in the step S140 and the spectral reflectances for the processing-target spot color ink (step S150). The procedure of the overprint prediction process will be described below in detail with reference to the flowchart shown in Fig. 13. Here, it is assumed that a dot percentage for the processing-target spot color ink is 60%. Further, it is assumed that the CxF chart for the processing-target spot color ink is printed in advance and colorimetry of each patch in the CxF chart is performed in advance.

After the overprint prediction process starts, first, the overprint coefficients (scaling coefficient j(n) and constant k(n)) in the above Equation (4) are calculated (step S152). In this regard, focusing on the case of "n=1" in the above Equation (4), for example, the practical maximum value and the practical minimum value for $R(1)_b \times R(1)_f$ are values obtained by applying the processing-target spot color ink on the base material and black (black solid), respectively. The same applies to cases other than "n=1". Therefore, in order to calculate the overprint coefficients, in a coordinate system representing the above Equation (4) (see Fig. 14), the coordinates representing the spectral reflectances in a state where the processing-target spot color ink at a dot percentage of 60% is applied on black are defined as a first calibration point P11, and the coordinates representing the spectral reflectance in a state where the processing-target spot color ink at a dot percentage of 60% is applied on the base material are defined as a second calibration point P12.

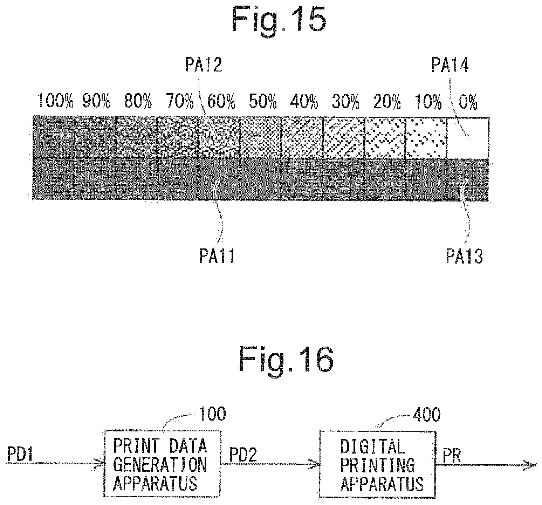

Focusing on the case of "n = 1", in regard to the first calibration point P11, values are substituted into the above Equation (4) as follows (see Fig. 15). The value obtained by colorimetry of a patch PA13 in the CxF chart (spectral reflectance of black) is substituted for $R(1)_b$, the value obtained by colorimetry of a patch PA12 in the CxF chart (spectral reflectance in a state where the processing-target spot color ink at a dot percentage of 60% is applied on the base material) is substituted for $R(1)_f$, and the value obtained by colorimetry of a patch PA11 in the CxF chart (spectral reflectance in a state where the processing-target spot color ink at a dot percentage of 60% is applied on black) is substituted for R(1). In addition, in regard to the second calibration point P12, values are substituted into the above Equation (4) as follows (see Fig. 15). The value obtained by colorimetry of a patch PA14 in the CxF chart (spectral reflectance of the base material) is substituted for $R(1)_b$, and the value obtained by colorimetry of the patch PA12 in the CxF chart (spectral reflectance in a state where the processing-target spot color ink at a dot percentage of 60% is applied on the base material) is substituted for $R(1)_f$ and R(1).

The overprint coefficients j(1) and k(1) are calculated by solving a simultaneous equation consisting of the equation relating to the first calibration point P11 and the equation relating to the second calibration point P12. That is, an equation representing a straight line denoted by reference numeral L11 in Fig. 14 is obtained. The overprint coefficients j(2) to j (36) and k(2) to k(36) are similarly calculated.

Although the patches are provided in 10% increments in the CxF chart shown in Fig. 15, an overprint coefficient corresponding to the dot percentage between two patches which are adjacent to each other in the horizontal direction can be obtained on the basis of the colorimetric values obtained by linear interpolation.

After the calculation of the overprint coefficients, the spectral reflectances R(1) to R(36) as the overprint prediction values are calculated using the above Equation (4) (step S154). In this regard, the values of the overprint coefficients j (1) to j (36) and k(1) to k(36) have been obtained in the step S152. Also, the values of R(1)$_f$ to R(36)$_f$ (spectral reflectances of the foreground color) have been obtained in advance by colorimetry of the patch (patch PA12 in Fig. 15) in the CxF chart for the processing-target spot color ink. Further, the values of R(1)$_b$ to R(36)$_b$ (the spectral reflectances of the background color) have already been obtained in the step S140 described above. Therefore, the spectral reflectances R(1) to R(36) can be obtained by substituting these values into the above Equation (4).

When the spectral reflectances R(1) to R(36) as the overprint prediction values are calculated as described above, the color prediction process having the flow shown in Fig. 9 ends.

It should be noted that, in the present embodiment, a learning step is implemented by the step S110, a tristimulus value acquisition step is implemented by the step S120, an inference step is implemented by the step S130, a correction step is implemented by the step S140, and a prediction step is implemented by the step S150. In addition, a printing step is implemented by the step S102, a spectral characteristic measurement step is implemented by the step S104, and a tristimulus value calculation step is implemented by the step S106.

<4. Flow of process for one PDF file>

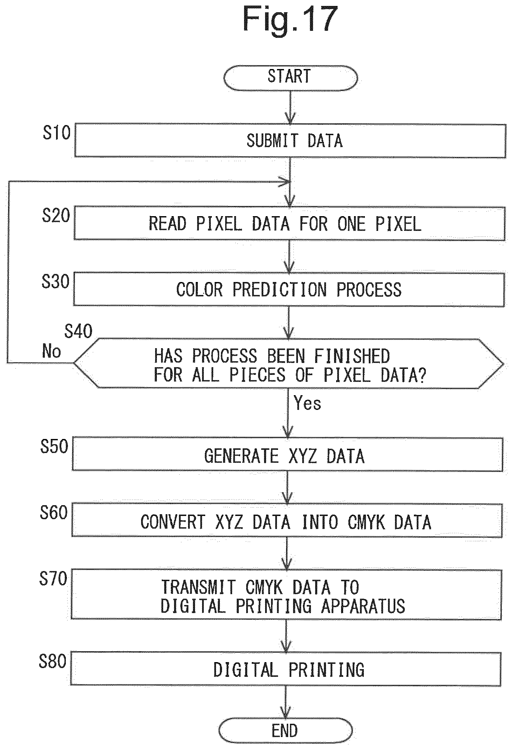

Next, a process flow from when one PDF file is given to the print data generation apparatus 100 until printing is performed by the digital printing apparatus 400 will be described with reference to the block diagram shown in Fig. 16 and the flowchart shown in Fig. 17.

First, a PDF file PD1 is inputted to the print data generation apparatus 100 as submitted data (step S10). Thereafter, the print data generation apparatus 100 reads pixel data for one pixel (step S20). Then, the color prediction process for predicting the color of the pixel data read in the step S20 is performed by the print data generation apparatus 100 (step S30). In the step S30, the color prediction process is performed by the abovementioned method in regard to the portion where the process color ink and the spot color ink are overprinted. However, it is assumed that the processes in the steps S100 and S110 among the processes shown in Fig. 9 are performed in advance. A specific method of the color prediction process in regard to a portion where a plurality of spot color inks are overprinted is not particularly limited.

After the end of the color prediction process, it is determined whether the color prediction process has been finished for all pieces of pixel data (step S40). If the color prediction process has been finished for all pieces of pixel data as a result of the determination, the flow proceeds to step S50, and if not, the flow returns to the step S20. In this way, the step S20 and the step S30 are repeated until the colors of all pieces of pixel data are predicted.

In the step S50, the print data generation apparatus 100 generates XYZ data (data in the CIEXYZ color space) which is data of tristimulus values X, Y, and Z on the basis of the result of the color prediction process in the step S30. In this regard, in the present embodiment, the data obtained as a result of the color prediction process is spectral reflectance data. Therefore, the tristimulus values X, Y, and Z are obtained from the spectral reflectances by the above Equation (5).

After generating the XYZ data, the print data generation apparatus 100 converts the XYZ data into CMYK data using an ICC profile for output to the digital printing apparatus 400 (step S60). Note that the configuration may be such that XYZ data is converted into Lab data (data in the CIELAB color space) and the Lab data is converted into CMYK data.

Thereafter, the CMYK data generated in the step S60 is transmitted from the print data generation apparatus 100 to the digital printing apparatus 400 as print data PD2 (step S70). Then, the digital printing apparatus 400 executes printing (digital printing) on the basis of the print data PD2 which is CMYK data (step S80). Thus, a printed matter PR is outputted from the digital printing apparatus 400. In this way, a series of processes ends.

<5. Effects>

According to the present embodiment, regarding the processing-target process color ink, the spectral reflectances are obtained from the tristimulus values using the neural network. Then, the obtained spectral reflectances are corrected. The spectral reflectances after correction are obtained such that the difference between the tristimulus values of the prediction source and the tristimulus values corresponding to the spectral reflectances after the correction is small. Therefore, even if the accuracy of predicting the spectral reflectances by the neural network is insufficient, the spectral reflectances corresponding to the tristimulus values as close to the tristimulus values of the prediction source as possible can be obtained by the correction. Then, an overprint prediction value is calculated on the basis of the spectral reflectances (spectral reflectances for the processing-target process color ink) obtained in this way and the spectral reflectances for the processing-target spot color ink. Since the overprint prediction value is calculated using the spectral reflectances in this way in regard to the overprint of the process color ink and the spot color ink, the color is predicted with higher accuracy than with the conventional method using the tristimulus values. In addition, since the spectral reflectances corresponding to the tristimulus values as close to the tristimulus values of the prediction source as possible is used as described above in regard to the process color ink, a decrease in the prediction accuracy due to the use of the neural network can be suppressed. From the above, the color obtained by overprinting the process color ink and the spot color ink can be predicted with higher accuracy than ever before. As a result, it is possible to obtain, by the digital printing apparatus, a printed matter with little difference from a printed matter outputted from the conventional printing apparatus.

<6. Modifications, etc.>

In the above embodiment, tristimulus values are given as input data to the neural network 720 when the spectral reflectances for the processing-target process color ink are predicted. However, the present invention is not limited thereto. Now, an example in which values other than tristimulus values are given as input data to the neural network 720 will be described below as modifications of the above embodiment.

<6.1 First Modification>

<6.1.1 Overview>

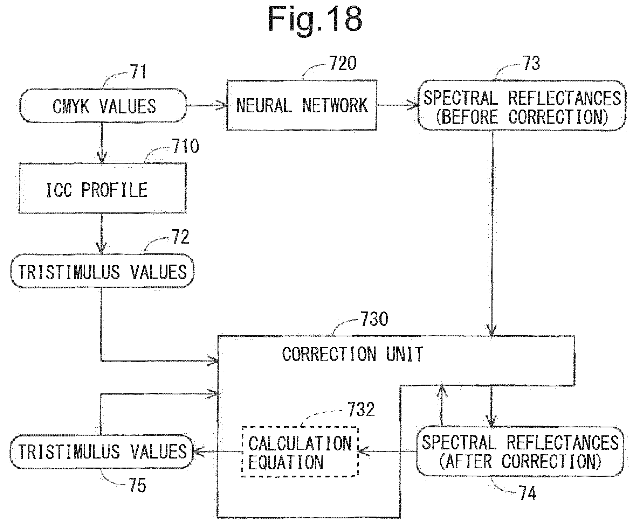

A first modification will be described with reference to Fig. 18. As can be seen from Fig. 18, in this modification, CMYK values 71 are given to the neural network 720 as input data. That is, a neural network 720 that predicts the spectral reflectances 73 from the CMYK values 71 is prepared. Note that the input layer of the neural network 720 is composed of four units that receive the C value, M value, Y value, and K value. Prior to the prediction of the spectral reflectances for the processing-target process color ink, a process for causing the neural network 720 to learn in advance the relationship between the CMYK values and the spectral reflectances is performed. Then, using the learned neural network 720, the spectral reflectances for the processing-target process color ink are predicted.

In addition, in regard to the processing-target process color ink, the CMYK values 71 are converted into the tristimulus values 72 using the ICC profile 710 in order that the spectral reflectances (the spectral reflectances outputted from the neural network 720) 73 is corrected such that the tristimulus values 75 corresponding to the spectral reflectances 74 to be used in the overprint prediction process is as close to the tristimulus values 72 of the prediction source as possible. Then, the spectral reflectances 73 are corrected in the same manner as in the above embodiment.

<6.1.2 Processing procedure>

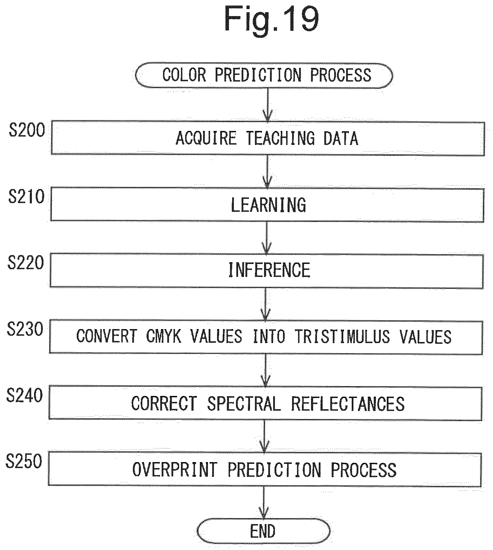

Fig. 19 is a flowchart showing the procedure of a color prediction process in the present modification. First, a process of acquiring teaching data necessary for learning in the neural network 720 is performed (step S200). In the present modification, one piece of teaching data is composed of 36 spectral reflectances obtained by colorimetry of one process-color-ink patch and CMYK values (C value, M value, Y value, and K value) for the process color ink. Therefore, unlike the above embodiment, the process (the process of the step S106 in Fig. 10) for obtaining the tristimulus values from the spectral reflectances is not necessary regarding the teaching data.

After acquiring the teaching data, machine learning using the teaching data obtained in the step S200 is performed by the neural network 720 (step S210). Thus, the parameters (weighting coefficients, biases) of the neural network 720 are optimized. Note that, unlike the above embodiment, the neural network 720 is given the CMYK values 71 as input data.

Thereafter, the CMYK values 71 for the processing-target process color ink are given as input data to the learned neural network 720, and thus, the spectral reflectances 73 for the processing-target process color ink are obtained (step S220). Further, the CMYK values 71 for the processing-target process color ink are converted into the tristimulus values 72 using the ICC profile 710 (step S230).

next, a process for correcting the spectral reflectances 73 obtained in the step S220 is performed in the same manner as in the above embodiment (step S240). During this process, the spectral reflectances 74 after the correction are obtained such that the difference between the tristimulus values 72 acquired in the step S230 and the tristimulus values 75 corresponding to the spectral reflectances 74 after the correction is small, while an increase in the difference between the spectral reflectances 73 before the correction and the spectral reflectances 74 after the correction is suppressed. Then, an overprint prediction process is performed in the same manner as in the above embodiment (step S250).

It should be noted that, in the present modification, a learning step is implemented by the step S210, an inference step is implemented by the step S220, a tristimulus value acquisition step is implemented by the step S230, a correction step is implemented by the step S240, and a prediction step is implemented by the step S250.

As described above, even when the CMYK values 71 are given to the neural network 720 as input data, a color obtained by overprinting the process color ink and the spot color ink can be predicted with higher accuracy than ever before, as in the above embodiment.

<6.2 Second Modification>

<6.2.1 Overview>

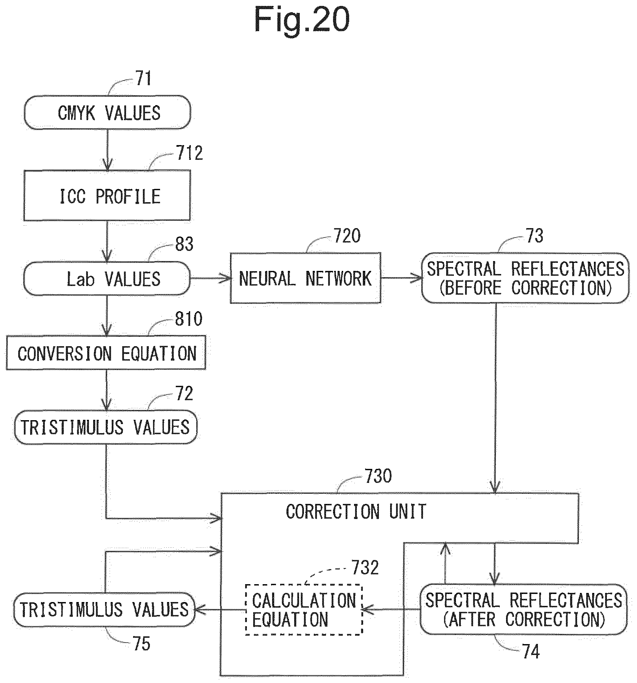

A second modification will be described with reference to Fig. 20. As can be seen from Fig. 20, in the present modification, Lab values 83 are given to the neural network 720 as input data. That is, a neural network 720 that predicts the spectral reflectances 73 from the Lab values 83 is prepared. For this reason, in the present modification, an ICC profile 712 for converting the CMYK values 71 into the Lab values 83 is provided. It should be noted that the input layer of the neural network 720 is composed of three units that receive "L value", "a value", and "b value". Prior to the prediction of the spectral reflectances for the processing-target process color ink, a process for causing the neural network 720 to learn in advance the relationship between the Lab values and the spectral reflectances is performed. Then, using the learned neural network 720, the spectral reflectances for the processing-target process color ink are predicted.

In addition, in regard to the processing-target process color ink, the Lab values 83 are converted into the tristimulus values 72 using a predetermined conversion equation 810 in order that the spectral reflectances (the spectral reflectances outputted from the neural network 720) 73 are corrected such that the tristimulus values 75 corresponding to the spectral reflectances 74 to be used in the overprint prediction process are as close to the tristimulus values 72 of the prediction source as possible. Then, the spectral reflectances 73 are corrected in the same manner as in the above embodiment.

<6.2.2 Processing procedure>

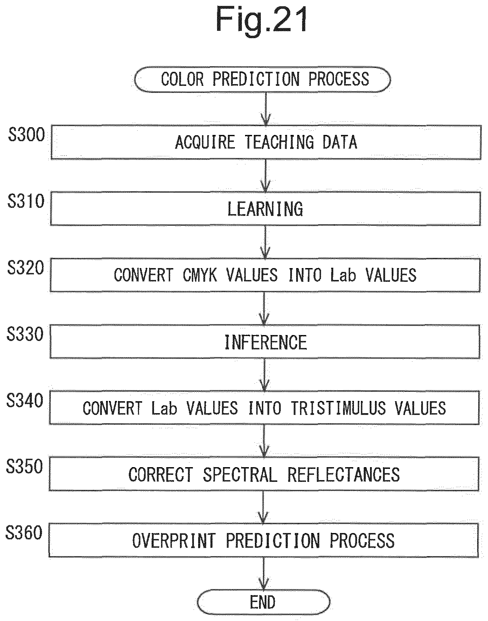

Fig. 21 is a flowchart showing the procedure of a color prediction process in the present modification. First, a process of acquiring teaching data necessary for learning in the neural network 720 is performed (step S300). In the present modification, one piece of teaching data is composed of 36 spectral reflectances obtained by colorimetry of one process-color-ink patch and Lab values ("L value", "a value", and "b value") obtained from the 36 spectral reflectances. Therefore, a process for obtaining the Lab values from the spectral reflectances is required regarding the teaching data.

After acquiring the teaching data, machine learning using the teaching data obtained in the step S300 is performed by the neural network 720 (step S310). Thus, the parameters (weighting coefficients, biases) of the neural network 720 are optimized. Note that, unlike the above embodiment, the Lab values 83 are given to the neural network 720 as input data.

Next, a process of acquiring the Lab values 83 for the processing-target process color ink is performed (step S320). Specifically, the CMYK values 71 for the processing-target process color ink are converted into the Lab values 83 using the ICC profile 712.

Thereafter, the Lab values 83 for the processing-target process color ink are given as input data to the learned neural network 720, and thus, the spectral reflectances 73 for the processing-target process color ink are obtained (step S330). Further, the Lab values 83 for the processing-target process color ink are converted into the tristimulus values 72 using the predetermined conversion equation 810 (step S340).

Next, a process for correcting the spectral reflectances 73 obtained in the step S330 is performed in the same manner as in the above embodiment (step S350). During this process, the spectral reflectances 74 after the correction are obtained such that the difference between the tristimulus values 72 acquired in the step S340 and the tristimulus values 75 corresponding to the spectral reflectances 74 after the correction is small, while an increase in the difference between the spectral reflectances 73 before the correction and the spectral reflectances 74 after the correction is suppressed. Then, an overprint prediction process is performed in the same manner as in the above embodiment (step S360).

It should be noted that, in the present modification, a learning step is implemented by the step S310, a Lab value acquisition step is implemented by the step S320, an inference step is implemented by the step S330, a conversion step is implemented by the step S340, a correction step is implemented by the step S350, and a prediction step is implemented by the step S360.

As described above, even when the Lab values 83 are given to the neural network 720 as input data, a color obtained by overprinting the process color ink and the spot color ink can be predicted with higher accuracy than ever before, as in the above embodiment.

**<7. Others>**

The present invention is not limited to the above-described embodiment (including modifications).

In the above embodiment, a color prediction model is constructed after spectral reflectances are obtained by colorimetry of the patches in the color chart by the colorimeter 500. However, a color prediction model can also be constructed on the basis of measured values other than spectral reflectances. For example, the present invention can also be embodied on the basis of spectral absorption factors (values each obtained by subtracting the spectral reflectance from 1) or spectral absorption coefficients $\alpha$ each obtained from the following Equation (9). Note that measured values such as spectral reflectances, spectral absorption factors, and spectral absorption coefficients correspond to "spectral characteristics". When the reflectance of paper white at a certain wavelength is $R_0$, the reflectance of the corresponding patch is R, and the thickness of the ink is x, the spectral absorption coefficient $\alpha$ is expressed by the following Equation (9) when multiple reflection is not considered.

$$\alpha = -(1/(2x)) \cdot \ln(R/R_0) \ \ldots \ (9)$$

Furthermore, in the above embodiment, a color prediction model is constructed using the CxF chart shown in Fig. 15. Specifically, the color prediction model is constructed using the CxF chart including upper 11 patches (patches obtained by printing a target spot color ink on the base material such as paper with dot percentages being changed) and lower 11 patches (patches obtained by printing the target spot color ink on black (black solid) with dot percentages being changed). However, it is also possible to construct a color prediction model using a "simple CxF chart" including only the upper patches.

**Claims**

1.  A color prediction method for predicting a color obtained by applying a spot color ink on a process color ink, the color prediction method comprising:

    a learning step (S110, S210, S310) of performing machine learning using a plurality of pieces of teaching data including color component values for the process color ink and spectral characteristics corresponding to the color component values by a neural network that takes color component values as input data and takes a spectral characteristics as output data;
    an inference step (S130, S220, S330) of giving, as input data, color component values of a processing-target process color ink which is a process color ink constituting a prediction target color to a learned neural network obtained in the learning step (S110, S210, S310) so as to obtain spectral characteristics for the processing-target process color ink;
    a correction step (S140, S240, S350) of correcting the spectral characteristics obtained in the inference step (S130, S220, S330); and
    a prediction step (S150, S250, S360) of obtaining, based on the spectral characteristics after correction by the correction step (S140, S240, S350) and spectral characteristics for a processing-target spot color ink which is a spot color ink constituting the prediction target color, spectral characteristics in a state where the processing-target spot color ink is applied on the processing-target process color ink,
    **characterized in that**,
    in the correction step (S140, S240, S350), the spectral characteristics after the correction are obtained such that a value of an objective function is minimized, the objective function being represented by a following equation:

$$L = C1 \cdot \Delta X + C2 \cdot \Delta Y + C3 \cdot \Delta Z + C4 \cdot \Delta S$$

    where L represents the objective function, $\Delta X$, $\Delta Y$, and $\Delta Z$ represent values determined according to respective differences between tristimulus values X, Y, and Z of the processing-target process color ink and tristimulus values X, Y, and Z corresponding to the spectral characteristics after the correction, $\Delta S$ represents a sum of squares of differences between the spectral characteristics before the correction and the spectral characteristics after the correction, and C1, C2, C3, and C4 represent coefficients.

2.  The color prediction method according to claim 1, further comprising a tristimulus value acquisition step (S120) of acquiring tristimulus values of the processing-target process color ink using a predetermined conversion file, wherein

the color component values are tristimulus values, and
in the inference step (S130), the tristimulus values obtained in the tristimulus value acquisition step (S120) are given to the learned neural network as input data.

3. The color prediction method according to claim 2, wherein the predetermined conversion file is an ICC profile.

4. The color prediction method according to claim 2 or claim 3, further comprising:

a printing step (S102) of printing a color of the process color ink in order to generate each piece of the teaching data;
a spectral characteristic measurement step (S104) of measuring spectral characteristics of the color printed in the printing step (S102); and
a tristimulus value calculation step (S106) of obtaining tristimulus values from the spectral characteristics measured in the spectral characteristic measurement step (S104) based on a predetermined calculation equation.

5. The color prediction method according to claim 1, further comprising a tristimulus value acquisition step (S230) of acquiring tristimulus values of the processing-target process color ink using a predetermined conversion file, wherein

the color component values are CMYK values, and
in the correction step (S240), the spectral characteristics after the correction are obtained such that a difference between the tristimulus values obtained in the tristimulus value acquisition step (S230) and the tristimulus values corresponding to the spectral characteristics after the correction is small.

6. The color prediction method according to claim 1, further comprising:

a Lab value acquisition step (S320) of acquiring Lab values of the processing-target process color ink using a predetermined conversion file; and
a conversion step (S340) of converting the Lab values acquired in the Lab value acquisition step into tristimulus values, wherein
the color component values are Lab values,
in the inference step (S330), the Lab values acquired in the Lab value acquisition step (S320) are given to the learned neural network as input data, and
in the correction step (S350), the spectral characteristics after the correction are obtained such that a difference between the tristimulus values obtained in the conversion step (S340) and tristimulus values corresponding to the spectral characteristics after the correction is small.

7. The color prediction method according to claim 1, wherein values of the C1, the C2, the C3, and the C4 are all one.

8. The color prediction method according to any one of claims 1 to 7, wherein the spectral characteristics are any one of spectral reflectances, spectral absorption factors, and spectral absorption coefficients.

9. The color prediction method according to claim 8, wherein

the spectral characteristics are spectral reflectances, and
the output data from the neural network are spectral reflectances, the number of the spectral reflectances being obtained by dividing a wavelength range from 380 nm to 730 nm or a wavelength range from 400 nm to 700 nm by a unit wavelength range of an appropriate size.

10. A color prediction program for predicting a color obtained by applying a spot color ink on a process color ink, the color prediction program causing a computer to execute:

a learning step (S110, S210, S310) of performing machine learning using a plurality of pieces of teaching data including color component values for the process color ink and spectral characteristics corresponding to the color component values by a neural network that takes color component values as input data and takes spectral characteristics as output data;
an inference step (S130, S220, S330) of giving, as input data, color component values of a processing-target process color ink which is a process color ink constituting a prediction target color to a learned neural network obtained in the learning step (S110, S210, S310) so as to obtain spectral characteristics for the processing-target process color ink;

a correction step (S140, S240, S350) of correcting the spectral characteristics obtained in the inference step (S130, S220, S330); and

a prediction step (S150, S250, S360) of obtaining, based on the spectral characteristics after correction by the correction step (S140, S240, S350) and spectral characteristics for a processing-target spot color ink which is a spot color ink constituting the prediction target color, spectral characteristics in a state where the processing-target spot color ink is applied on the processing-target process color ink,

**characterized in that**,

in the correction step (S140, S240, S350), the spectral characteristics after the correction are obtained such that a value of an objective function is minimized, the objective function being represented by a following equation:

$$L = C1 \cdot \Delta X + C2 \cdot \Delta Y + C3 \cdot \Delta Z + C4 \cdot \Delta S$$

where L represents the objective function, $\Delta X$, $\Delta Y$, and $\Delta Z$ represent values determined according to respective differences between tristimulus values X, Y, and Z of the processing-target process color ink and tristimulus values X, Y, and Z corresponding to the spectral characteristics after the correction, $\Delta S$ represents a sum of squares of differences between the spectral characteristics before the correction and the spectral characteristics after the correction, and C1, C2, C3, and C4 represent coefficients.

11. The color prediction program according to claim 10, wherein values of the C1, the C2, the C3, and the C4 are all one.


**Patentansprüche**

1. Farbvorhersageverfahren zum Vorhersagen einer Farbe, die durch Auftragen einer Volltonfarbtinte auf eine Prozessfarbtinte erhalten wird, wobei das Farbvorhersageverfahren aufweist:

einen Lernschritt (S110, S210, S310) des Durchführens von maschinellem Lernen unter Verwendung einer Vielzahl von Teilen von Lerndaten, die Farbkomponentenwerte für die Prozessfarbtinte und spektrale Eigenschaften entsprechend den Farbkomponentenwerten enthalten, durch ein neuronales Netzwerk, das Farbkomponentenwerte als Eingangsdaten und spektrale Eigenschaften als Ausgangsdaten nimmt;

einen Interferenzschritt (S130, S220, S330), bei dem als Eingangsdaten Farbkomponentenwerte einer Verarbeitungs-Ziel-Prozessfarbtinte, die eine Prozessfarbtinte ist, die eine Vorhersage-Zielfarbe bildet, an ein gelerntes neuronales Netzwerk gegeben werden, das in dem Lernschritt (S110, S210, S310) erhalten wurde, um spektrale Eigenschaften für die Verarbeitungs-Ziel-Prozessfarbtinte zu erhalten;

einen Korrekturschritt (S140, S240, S350) zum Korrigieren der in dem Interferenzschritt (S130, S220, S330) erhaltenen spektralen Eigenschaften; und

einen Vorhersageschritt (S150, S250, S360) des Erhaltens, basierend auf den spektralen Eigenschaften nach der Korrektur durch den Korrekturschritt (S140, S240, S350) und den spektralen Eigenschaften für eine Verarbeitungs-Ziel-Volltonfarbtinte, die eine Volltonfarbtinte ist, die die Vorhersage-Zielfarbe bildet, von spektralen Eigenschaften in einem Zustand, in dem die Verarbeitungs-Ziel-Volltonfarbtinte auf die Verarbeitungs-Ziel-Prozessfarbtinte aufgebracht wird,

**dadurch gekennzeichnet, dass**,

in dem Korrekturschritt (S140, S240, S350) die spektralen Eigenschaften nach der Korrektur so erhalten werden, dass ein Wert einer Zielfunktion minimiert wird, wobei die Zielfunktion durch eine folgende Gleichung dargestellt wird:

$$L = C1 \cdot \Delta X + C2 \cdot \Delta Y + C3 \cdot \Delta Z + C4 \cdot \Delta S$$

wobei L die Zielfunktion darstellt, $\Delta X$, $\Delta Y$ und $\Delta Z$ Werte darstellen, die entsprechend den jeweiligen Differenzen zwischen den Tristimuluswerten X, Y und Z der Verarbeitungs-Ziel-Prozessfarbtinte und den Tristimuluswerten X, Y und Z, die den spektralen Eigenschaften nach der Korrektur entsprechen, bestimmt werden, $\Delta S$ eine Summe der Quadrate der Differenzen zwischen den spektralen Eigenschaften vor der Korrektur und den spektralen Eigenschaften nach der Korrektur darstellt und C1, C2, C3 und C4 Koeffizienten darstellen.

2. Farbvorhersageverfahren nach Anspruch 1, das ferner einen Tristimuluswert-Erfassungsschritt (S120) zum Erfassen von Tristimuluswerten der Verarbeitungs-Ziel-Prozessfarbtinte unter Verwendung einer vorbestimmten Umwandlungsdatei aufweist, wobei

die Farbkomponentenwerte Tristimuluswerte sind, und
in dem Interferenzschritt (S130) die im Tristimuluswert-Erfassungsschritt (S120) erhaltenen Tristimuluswerte dem gelernten neuronalen Netz als Eingangsdaten übergeben werden.

3. Farbvorhersageverfahren nach Anspruch 2, wobei die vorbestimmte Umwandlungsdatei ein ICC-Profil ist.

4. Farbvorhersageverfahren nach Anspruch 2 oder 3, ferner aufweisend:

einen Druckschritt (S102) des Druckens einer Farbe der Prozessfarbtinte, um jedes Stück der Lerndaten zu erzeugen;
einen Spektraleigenschaften-Messschritt (S104) zum Messen von spektralen Eigenschaften der im Druckschritt (S102) gedruckten Farbe; und
einen Tristimuluswert-Berechnungsschritt (S106) zum Erhalten von Tristimuluswerten aus den in dem Spektraleigenschaften-Messschritt (S104) gemessenen spektralen Eigenschaften auf der Grundlage einer vorbestimmten Berechnungsgleichung.

5. Farbvorhersageverfahren nach Anspruch 1, das ferner einen Tristimuluswert-Erfassungsschritt (S230) zum Erfassen von Tristimuluswerten der Verarbeitungs-Ziel-Prozessfarbtinte unter Verwendung einer vorbestimmten Umwandlungsdatei aufweist, wobei

die Farbkomponentenwerte CMYK-Werte sind, und
in dem Korrekturschritt (S240) die spektralen Eigenschaften nach der Korrektur so erhalten werden, dass eine Differenz zwischen den Tristimuluswerten, die in dem Tristimuluswert-Erfassungsschritt (S230) erhalten wurden, und den Tristimuluswerten, die den spektralen Eigenschaften nach der Korrektur entsprechen, klein ist.

6. Farbvorhersageverfahren nach Anspruch 1, ferner aufweisend:

einen Lab-Wert-Erfassungsschritt (S320) des Erfassens von Lab-Werten der Verarbeitungs-Ziel-Prozessfarbtinte unter Verwendung einer vorbestimmten Umwandlungsdatei; und
einen Umwandlungsschritt (S340) des Umwandelns der im Lab-Wert-Erfassungsschritt erfassten Lab-Werte in Tristimuluswerte, wobei
die Farbkomponentenwerte Lab-Werte sind,
in dem Inferenzschritt (S330) die in dem Lab-Wert-Erfassungsschritt (S320) erfassten Lab-Werte dem gelernten neuronalen Netz als Eingangsdaten zugeführt werden, und
im Korrekturschritt (S350) die spektralen Eigenschaften nach der Korrektur so erhalten werden, dass eine Differenz zwischen den im Umwandlungsschritt (S340) erhaltenen Tristimuluswerten und den Tristimuluswerten, die den spektralen Eigenschaften nach der Korrektur entsprechen, klein ist.

7. Farbvorhersageverfahren nach Anspruch 1, wobei die Werte von C1, C2, C3 und C4 alle eins sind.

8. Farbvorhersageverfahren nach einem der Ansprüche 1 bis 7, wobei die spektralen Eigenschaften eine Auswahl aus spektralen Reflexionen, spektralen Absorptionsfaktoren und spektralen Absorptionskoeffizienten darstellen.

9. Farbvorhersageverfahren nach Anspruch 8, wobei

die spektralen Eigenschaften spektrale Reflexionen sind, und
die Ausgangsdaten des neuronalen Netzes spektrale Reflexionen sind, wobei die Anzahl der spektralen Reflexionen durch Division eines Wellenlängenbereichs von 380 nm bis 730 nm oder eines Wellenlängenbereichs von 400 nm bis 700 nm durch einen Einheits-Wellenlängenbereich geeigneter Größe erhalten wird.

10. Farbvorhersageprogramm zum Vorhersagen einer Farbe, die durch Auftragen einer Volltonfarbtinte auf eine Prozessfarbtinte erhalten wird, wobei das Farbvorhersageprogramm einen Computer veranlasst Folgendes auszuführen:

einen Lernschritt (S110, S210, S310) des Durchführens von maschinellem Lernen unter Verwendung einer Vielzahl von Teilen von Lerndaten, die Farbkomponentenwerte für die Prozessfarbtinte und spektrale Eigenschaften entsprechend den Farbkomponentenwerten enthalten, durch ein neuronales Netz, das Farbkomponentenwerte als Eingangsdaten und spektrale Eigenschaften als Ausgangsdaten nimmt;

einen Interferenzschritt (S130, S220, S330), bei dem als Eingangsdaten Farbkomponentenwerte einer Verarbeitungs-Ziel-Prozessfarbtinte, die eine Prozessfarbtinte ist, die eine Vorhersage-Zielfarbe bildet, an ein gelerntes neuronales Netzwerk gegeben werden, das in dem Lernschritt (S110, S210, S310) erhalten wurde, um spektrale Eigenschaften für die Verarbeitungs-Ziel-Prozessfarbtinte zu erhalten;

einen Korrekturschritt (S140, S240, S350) zum Korrigieren der in dem Interferenzschritt (S130, S220, S330) erhaltenen spektralen Eigenschaften; und

einen Vorhersageschritt (S150, S250, S360) des Erhaltens, basierend auf den spektralen Eigenschaften nach der Korrektur durch den Korrekturschritt (S140, S240, S350) und den spektralen Eigenschaften für eine Verarbeitungs-Ziel-Volltonfarbtinte, die eine Volltonfarbtinte ist, die die Vorhersage-Zielfarbe bildet, von spektralen Eigenschaften in einem Zustand, in dem die Verarbeitungs-Ziel-Volltonfarbtinte auf die Verarbeitungs-Ziel-Prozessfarbtinte aufgebracht wird,

**dadurch gekennzeichnet, dass**,

in dem Korrekturschritt (S140, S240, S350) die spektralen Eigenschaften nach der Korrektur so erhalten werden, dass ein Wert einer Zielfunktion minimiert wird, wobei die Zielfunktion durch eine folgende Gleichung dargestellt wird:

$$L = C1 \cdot \Delta X + C2 \cdot \Delta Y + C3 \cdot \Delta Z + C4 \cdot \Delta S$$

wobei L die Zielfunktion darstellt, $\Delta X$, $\Delta Y$ und $\Delta Z$ Werte darstellen, die entsprechend den jeweiligen Differenzen zwischen den Tristimuluswerten X, Y und Z der Verarbeitungs-Ziel-Prozessfarbtinte und den Tristimuluswerten X, Y und Z, die den spektralen Eigenschaften nach der Korrektur entsprechen, bestimmt werden, $\Delta S$ eine Summe der Quadrate der Differenzen zwischen den spektralen Eigenschaften vor der Korrektur und den spektralen Eigenschaften nach der Korrektur darstellt und C1, C2, C3 und C4 Koeffizienten darstellen.

**11.** Farbvorhersageprogramm nach Anspruch 10, wobei die Werte C1, C2, C3 und C4 alle eins sind.

## Revendications

**1.** Méthode de prédiction de couleur pour prédire une couleur obtenue par application d'une encre de ton direct sur une encre primaire, la méthode de prédiction de couleur comprenant :

une étape d'apprentissage (S110, S210, S310) consistant à réaliser un apprentissage automatique en utilisant une pluralité d'éléments de données de formation incluant des valeurs de composantes de couleur pour l'encre primaire et des caractéristiques spectrales correspondant aux valeurs de composantes de couleur par un réseau neuronal qui prend des valeurs de composantes de couleur en tant que données d'entrée et prend des caractéristiques spectrales en tant que données de sortie ;

une étape de déduction (S130, S220, S330) consistant à donner, en tant que données d'entrée, des valeurs de composantes de couleur d'une encre primaire cible de traitement qui est une encre primaire constituant une couleur cible de prédiction à un réseau neuronal formé obtenu à l'étape d'apprentissage (S110, S210, S310) de manière à obtenir des caractéristiques spectrales pour l'encre primaire cible de traitement ;

une étape de correction (S140, S240, S350) consistant à corriger les caractéristiques spectrales obtenues à l'étape de déduction (S130, S220, S330) ; et

une étape de prédiction (S150, S250, S360) consistant à obtenir, sur la base des caractéristiques spectrales après correction par l'étape de correction (S140, S240, S350) et des caractéristiques spectrales pour une encre de ton direct cible de traitement qui est une encre de ton direct constituant la couleur cible de prédiction, des caractéristiques spectrales dans un état où l'encre de ton direct cible de traitement est appliquée sur l'encre primaire cible de traitement,

**caractérisée en ce que**,

à l'étape de correction (S140, S240, S350), les caractéristiques spectrales après la correction sont obtenues de sorte qu'une valeur d'une fonction objective soit réduite au minimum, la fonction objective étant représentée par une équation suivante :

$$\mathrm{L} = \mathrm{C1} \cdot \Delta \mathrm{X} + \mathrm{C2} \cdot \Delta \mathrm{Y} + \mathrm{C3} \cdot \Delta \mathrm{Z} + \mathrm{C4} \cdot \Delta \mathrm{S}$$

dans laquelle L représente la fonction objective, $\Delta X$, $\Delta Y$ et $\Delta Z$ représentent des valeurs déterminées conformément à des différences respectives entre des composantes trichromatiques X, Y et Z de l'encre primaire cible de traitement et des composantes trichromatiques X, Y et Z correspondant aux caractéristiques spectrales après la correction, $\Delta S$ représente une somme des carrés des différences entre les caractéristiques spectrales avant la correction et les caractéristiques spectrales après la correction, et C1, C2, C3 et C4 représentent des coefficients.

2. Méthode de prédiction de couleur selon la revendication 1, comprenant en outre une étape d'acquisition de composantes trichromatiques (S120) consistant à acquérir des composantes trichromatiques de l'encre primaire cible de traitement en utilisant un fichier de conversion prédéterminé, dans laquelle

les valeurs de composantes de couleur des composantes trichromatiques, et
à l'étape de déduction (S130), les composantes trichromatiques obtenues à l'étape d'acquisition de composantes trichromatiques (S120) sont données au réseau neuronal formé en tant que données d'entrée.

3. Méthode de prédiction de couleur selon la revendication 2, dans laquelle le fichier de conversion prédéterminé est un profil ICC.

4. Méthode de prédiction de couleur selon la revendication 2 ou la revendication 3, comprenant en outre :

une étape d'impression (S102) consistant à imprimer une couleur de l'encre primaire afin de générer chaque élément des données de formation ;
une étape de mesure de caractéristiques spectrales (S104) consistant à mesurer des caractéristiques spectrales de la couleur imprimée à l'étape d'impression (S102) ; et
une étape de calcul de composantes trichromatiques (S106) consistant à obtenir des composantes trichromatiques à partir des caractéristiques spectrales mesurées à l'étape de mesure de caractéristiques spectrales (S104) sur la base d'une équation de calcul prédéterminée.

5. Méthode de prédiction de couleur selon la revendication 1, comprenant en outre une étape d'acquisition de composantes trichromatiques (S230) consistant à acquérir des composantes trichromatiques de l'encre primaire cible de traitement en utilisant un fichier de conversion prédéterminé, dans laquelle

les valeurs de composantes de couleur sont des valeurs CMYK, et
à l'étape de correction (S240), les caractéristiques spectrales après la correction sont obtenues de sorte qu'une différence entre les composantes trichromatiques obtenues à l'étape d'acquisition de composantes trichromatiques (S230) et les composantes trichromatiques correspondant aux caractéristiques spectrales après la correction soit faible.

6. Méthode de prédiction de couleur selon la revendication 1, comprenant en outre :

une étape d'acquisition de valeurs de laboratoire (S320) consistant à acquérir des valeurs de laboratoire de l'encre primaire cible de traitement en utilisant un fichier de conversion prédéterminé ; et
une étape de conversion (S340) consistant à convertir les valeurs de laboratoire acquises à l'étape d'acquisition de valeurs de laboratoire en composantes trichromatiques, dans laquelle
les valeurs de composantes de couleur sont des valeurs de laboratoire,
à l'étape de déduction (S330), les valeurs de laboratoire acquises à l'étape d'acquisition de valeurs de laboratoire (S320) sont données au réseau neuronal formé en tant que données d'entrée, et
à l'étape de correction (S350), les caractéristiques spectrales après la correction sont obtenues de sorte qu'une différence entre les composantes trichromatiques obtenues à l'étape de conversion (S340) et les composantes trichromatiques correspondant aux caractéristiques spectrales après la correction soit faible.

7. Méthode de prédiction de couleur selon la revendication 1, dans laquelle des valeurs du C1, du C2, du C3 et du C4 sont toutes de un.

8. Méthode de prédiction de couleur selon l'une quelconque des revendications 1 à 7, dans laquelle les caractéristiques spectrales sont les unes quelconques parmi des réflectances spectrales, des facteurs d'absorption spectrale et des coefficients d'absorption spectrale.

9. Méthode de prédiction de couleur selon la revendication 8, dans laquelle

les caractéristiques spectrales sont des réflectances spectrales, et
les données de sortie provenant du réseau neuronal sont des réflectances spectrales, le nombre des réflectances spectrales étant obtenu par division d'une plage de longueur d'onde de 380 nm à 730 nm ou d'une plage de longueur d'onde de 400 nm à 700 nm par une plage de longueur d'onde unitaire d'une taille appropriée.

10. Programme de prédiction de couleur pour prédire une couleur obtenue par application d'une encre de ton direct sur une encre primaire, le programme de prédiction de couleur amenant un ordinateur à exécuter :

une étape d'apprentissage (S110, S210, S310) consistant à réaliser un apprentissage automatique en utilisant une pluralité d'éléments de données de formation incluant des valeurs de composantes de couleur pour l'encre primaire et des caractéristiques spectrales correspondant aux valeurs de composantes de couleur par un réseau neuronal qui prend des valeurs de composantes de couleur en tant que données d'entrée et prend des caractéristiques spectrales en tant que données de sortie ;
une étape de déduction (S130, S220, S330) consistant à donner, en tant que données d'entrée, des valeurs de composantes de couleur d'une encre primaire cible de traitement qui est une encre primaire constituant une couleur cible de prédiction à un réseau neuronal formé obtenu à l'étape d'apprentissage (S110, S210, S310) de manière à obtenir des caractéristiques spectrales pour l'encre primaire cible de traitement ;
une étape de correction (S140, S240, S350) consistant à corriger les caractéristiques spectrales obtenues à l'étape de déduction (S130, S220, S330) ; et
une étape de prédiction (S150, S250, S360) consistant à obtenir, sur la base des caractéristiques spectrales après correction par l'étape de correction (S140, S240, S350) et des caractéristiques spectrales pour une encre de ton direct cible de traitement qui est une encre de ton direct constituant la couleur cible de prédiction, des caractéristiques spectrales dans un état où l'encre de ton direct cible de traitement est appliquée sur l'encre primaire cible de traitement,
**caractérisé en ce que**,
à l'étape de correction (S140, S240, S350), les caractéristiques spectrales après la correction sont obtenues de sorte qu'une valeur d'une fonction objective soit réduite au minimum, la fonction objective étant représentée par une équation suivante :

$$L = C1 \cdot \Delta X + C2 \cdot \Delta Y + C3 \cdot \Delta Z + C4 \cdot \Delta S$$

dans lequel L représente la fonction objective, $\Delta X$, $\Delta Y$ et $\Delta Z$ représentent des valeurs déterminées conformément à des différences respectives entre des composantes trichromatiques X, Y et Z de l'encre primaire cible de traitement et des composantes trichromatiques X, Y et Z correspondant aux caractéristiques spectrales après la correction, $\Delta S$ représente une somme des carrés des différences entre les caractéristiques spectrales avant la correction et les caractéristiques spectrales après la correction, et C1, C2, C3 et C4 représentent des coefficients.

11. Programme de prédiction de couleur selon la revendication 10, dans lequel des valeurs du C1, du C2, du C3 et du C4 sont toutes de un.

# Fig.1

# Fig.2

# Fig.3

FOREGROUND COLOR:SPOT COLOR

BACKGROUND COLOR:PROCESS COLOR

# Fig.4

CMYK VALUES — 71

ICC PROFILE — 710

TRISTIMULUS VALUES — 72

NEURAL NETWORK — 720

SPECTRAL REFLECTANCES (BEFORE CORRECTION) — 73

CORRECTION UNIT — 730

CALCULATION EQUATION — 732

SPECTRAL REFLECTANCES (AFTER CORRECTION) — 74

TRISTIMULUS VALUES — 75

# Fig.5

72(1)

72(2)

72(3)

720

73(1)

73(2)

73(3)

73(4)

73(36)

INPUT
LAYER

HIDDEN
LAYER

OUTPUT
LAYER

# Fig.6

SUM OF SQUARE ERRORS

# Fig.7

PREDICTED VALUE    ACTUALLY MEASURED VALUE

# Fig.8

# Fig.9

```
( COLOR PREDICTION PROCESS )
              │
              ▼
S100  [ ACQUIRE TEACHING DATA ]  ┐
              │                   ├ 81
              ▼                   │
S110  [ LEARNING ]               ┘
              │
              ▼
S120  [ CONVERT CMYK VALUES INTO TRISTIMULUS VALUES ]  ┐
              │                                          │
              ▼                                          │
S130  [ INFERENCE ]                                      ├ 82
              │                                          │
              ▼                                          │
S140  [ CORRECT SPECTRAL REFLECTANCES ]                  │
              │                                          │
              ▼                                          │
S150  [ OVERPRINT PREDICTION PROCESS ]                  ┘
              │
              ▼
          ( END )
```

# Fig.10

```
( ACQUIRE TEACHING DATA )
              │
              ▼
S102  [ PRINT PROCESS COLOR ]
              │
              ▼
S104  [ MEASURE SPECTRAL REFLECTANCES ]
              │
              ▼
S106  [ CONVERT SPECTRAL REFLECTANCES INTO TRISTIMULUS VALUES ]
              │
              ▼
          ( RETURN )
```

# Fig.11

# Fig.12

# Fig.13

OVERPRINT PREDICTION PROCESS

S152 | CALCULATE OVERPRINT COEFFICIENTS

S154 | CALCULATE OVERPRINT PREDICTION VALUE

RETURN

# Fig.14

$R(n)$

P11

L11

P12

$R(n)_b \times R(n)_f$

# Fig.15

PA12                                    PA14

100%  90%  80%  70%  60%  50%  40%  30%  20%  10%  0%

PA11                                    PA13

# Fig.16

PD1 → | PRINT DATA GENERATION APPARATUS | ⌒100 → PD2 → | DIGITAL PRINTING APPARATUS | ⌒400 → PR →

# Fig.17

```
                    START

S10 |         SUBMIT DATA

S20 |    READ PIXEL DATA FOR ONE PIXEL

S30 |     COLOR PREDICTION PROCESS

S40
No  <  HAS PROCESS BEEN FINISHED
       FOR ALL PIECES OF PIXEL DATA? >
                              Yes

S50 |         GENERATE XYZ DATA

S60 |    CONVERT XYZ DATA INTO CMYK DATA

S70 |    TRANSMIT CMYK DATA TO
         DIGITAL PRINTING APPARATUS

S80 |         DIGITAL PRINTING

                    END
```

# Fig.18

```
    ┌─71                      ┌─720                      ┌─73
 ┌──────────────┐      ┌────────────────┐      ┌──────────────────────┐
 │ CMYK VALUES  │─────▶│ NEURAL NETWORK │─────▶│ SPECTRAL REFLECTANCES │
 └──────────────┘      └────────────────┘      │  (BEFORE CORRECTION)  │
        │                                       └──────────────────────┘
        │         ┌─710                                     │
        ▼                                                   │
 ┌──────────────┐                                           │
 │ ICC PROFILE  │                                           │
 └──────────────┘                                           │
        │         ┌─72                                      │
        ▼                                                   │
 ┌────────────────────┐                                     │
 │ TRISTIMULUS VALUES │                                     │
 └────────────────────┘          ┌─730                      │
        │                                                   ▼
        │         ┌──────────────────────────────────────────────────┐
        └────────▶│              CORRECTION UNIT                       │
                  │                                                    │
        ┌────────▶│           ┌─732                                   │
        │         │   ┌ ─ ─ ─ ─ ─ ─ ─ ─ ┐      ┌──────────────────────┐
 ┌──────────────────┐│   CALCULATION    │◀─────│ SPECTRAL REFLECTANCES │
 │TRISTIMULUS VALUES│◀───  EQUATION      │      │  (AFTER CORRECTION)   │
 └──────────────────┘│   └ ─ ─ ─ ─ ─ ─ ─ ─ ┘      └──────────────────────┘
        └─75         │                                      └─74
                  └────────────────────────────────────────────────────┘
```

# Fig.19

COLOR PREDICTION PROCESS

S200 | ACQUIRE TEACHING DATA

S210 | LEARNING

S220 | INFERENCE

S230 | CONVERT CMYK VALUES INTO TRISTIMULUS VALUES

S240 | CORRECT SPECTRAL REFLECTANCES

S250 | OVERPRINT PREDICTION PROCESS

END

# Fig.20

```
        ┌─71
  ( CMYK VALUES )
        │
        ↓        ┌─712
  ┌──────────────┐
  │ ICC PROFILE  │
  └──────────────┘
        │
        ↓     ┌─83                    ┌─720              ┌─73
  ( Lab VALUES ) ──────→ ┌─────────────────┐ ──────→ ( SPECTRAL REFLECTANCES )
        │                │ NEURAL NETWORK  │          ( (BEFORE CORRECTION)   )
        │                └─────────────────┘
        ↓     ┌─810
  ┌────────────────────┐
  │ CONVERSION EQUATION│
  └────────────────────┘
        │
        ↓     ┌─72
  ( TRISTIMULUS VALUES )
```

```
                              ┌─730
        ┌────────────────────────────────────────────────────┐
        │              CORRECTION UNIT                        │
        │                                                     │
        │              ┌┄┄┄┄┄┄┄┄┄┄┄┐ ┌─732                    │
( TRISTIMULUS VALUES ) ←┊ CALCULATION┊ ←── ( SPECTRAL REFLECTANCES )
        │              ┊ EQUATION    ┊      ( (AFTER CORRECTION)   )
        └─75           └┄┄┄┄┄┄┄┄┄┄┄┘                  └─74
```

# Fig.21

```
                    ( COLOR PREDICTION PROCESS )
                                 │
                                 ▼
   S300  ┌─────────────────────────────────────────────────┐
         │              ACQUIRE TEACHING DATA               │
         └─────────────────────────────────────────────────┘
                                 │
                                 ▼
   S310  ┌─────────────────────────────────────────────────┐
         │                    LEARNING                      │
         └─────────────────────────────────────────────────┘
                                 │
                                 ▼
   S320  ┌─────────────────────────────────────────────────┐
         │          CONVERT CMYK VALUES INTO Lab VALUES     │
         └─────────────────────────────────────────────────┘
                                 │
                                 ▼
   S330  ┌─────────────────────────────────────────────────┐
         │                   INFERENCE                      │
         └─────────────────────────────────────────────────┘
                                 │
                                 ▼
   S340  ┌─────────────────────────────────────────────────┐
         │     CONVERT Lab VALUES INTO TRISTIMULUS VALUES   │
         └─────────────────────────────────────────────────┘
                                 │
                                 ▼
   S350  ┌─────────────────────────────────────────────────┐
         │           CORRECT SPECTRAL REFLECTANCES          │
         └─────────────────────────────────────────────────┘
                                 │
                                 ▼
   S360  ┌─────────────────────────────────────────────────┐
         │            OVERPRINT PREDICTION PROCESS          │
         └─────────────────────────────────────────────────┘
                                 │
                                 ▼
                            (   END   )
```

# Fig.22

FOREGROUND COLOR
$(X_f, Y_f, Z_f)$

BACKGROUND COLOR
$(X_b, Y_b, Z_b)$

# Fig.23

PA92      PA95                    PA94

100% 90% 80% 70% 60% 50% 40% 30% 20% 10% 0%

PA91                              PA93

# Fig.24

START

S900  PRINT CxF CHART

S910  CALCULATE OVERPRINT COEFFICIENT

S920  OBTAIN Xb, Yb, AND Zb

S930  OBTAIN Xf, Yf, AND Zf

S940  CALCULATE OVERPRINT PREDICTION VALUE

END

# Fig.25

X

P91

L91

P92

$X_b \times X_f$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6281501 A

- US 2016360072 A1